# EUROPÄISCHE PATENTSCHRIFT

(11) **EP 3 487 796 B1**
(45) Veröffentlichungstag und Bekanntmachung des Hinweises auf die Patenterteilung: **10.11.2021**
(21) Anmeldenummer: 17710135.9
(22) Anmeldetag: 21.02.2017
(51) Int. Cl.: B65G 47/08

(54) **VERFAHREN UND VORRICHTUNG ZUM UMGANG MIT IN MINDESTENS EINER REIHE HINTEREINANDER BEWEGTEN STUECKGUETERN**
METHOD AND DEVICE FOR HANDLING PIECE GOODS WHICH ARE MOVED ONE AFTER ANOTHER IN AT LEAST ONE ROW
PROCÉDÉ ET DISPOSITIF POUR LA MANUTENTION DE MARCHANDISES DE DÉTAIL DÉPLACÉES LES UNES DERRIÈRES LES AUTRES SUR AU MOINS UNE FILE

(30) Priorität: 21.07.2016 DE 102016213396
(43) Veröffentlichungstag der Anmeldung: 29.05.2019
(73) Patentinhaber: Krones Aktiengesellschaft, 93073 Neutraubling (DE)
(72) Erfinder: ASTNER, Michael, 93073 Neutraubling (DE); BEER, Erhard, 93073 Neutraubling (DE); KOLLMUSS, Manuel, 93073 Neutraubling (DE); MEHDI, Arsalan, 93073 Neutraubling (DE)
(74) Vertreter: Benninger, Johannes
(86) Internationale Anmeldenummer: PCT/EP2017/053870
(87) Internationale Veröffentlichungsnummer: WO 2018/015028

(56) Entgegenhaltungen:
- WO-A1-01/74693
- WO-A1-2015/014559
- DE-A1-102013 202 872
- DE-A1-102013 204 095
- DE-U1- 20 108 401
- FR-A1- 2 993 870
- US-A1- 2004 104 100
- US-A1- 2006 099 064

## Beschreibung

Die vorliegende Erfindung betrifft ein Verfahren zum Umgang mit in mindestens einer Reihe hintereinander bewegten Stückgütern mit den Merkmalen des unabhängigen Verfahrensanspruchs 1. Zudem betrifft die Erfindung eine Vorrichtung zum Umgang mit in mindestens einer Reihe hintereinander bewegten Stückgütern mit den Merkmalen des unabhängigen Vorrichtungsanspruchs 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, sog. Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus, normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Das Dokument DE 10 2013 204 095 A1 beschreibt eine Vorrichtung zum Ausrichten und/oder Gruppieren, bei der die Stückgüter in regelmäßiger Reihe und beabstandet voneinander zugeführt werden. Es ist auch möglich, die Stückgüter ungeordnet zuzuführen. Hierbei erfolgt eine sensorische Erfassung der Stückgüter, deren Daten einer Steuereinrichtung zugeführt und zur Ansteuerung der Manipulationseinrichtung verwendet werden.

Das Dokument_DE 10 2013 202 872 A1 offenbart ein Verfahren und eine Vorrichtung zum Ausrichten und/oder zum Gruppieren einer Anzahl von in wenigstens einer Reihe hintereinander beförderten Stückgütern und/oder Gebinden. Diese werden in Handhabung von Stückgütern zu ermöglichen, die in mindestens einer Reihe befördert bzw. transportiert werden. Die Bewegungssteuerung eines Manipulators zur Erfassung der Stückgüter soll exakt auf die Position der angelieferten Stückgüter abstimmbar sein, ohne dass hierzu ein großer Rechen- und/oder Steuerungsaufwand erforderlich sein soll.

DE 201 08 401 U1 offenbart die Merkmale des Oberbegriffs des Anspruchs 1.

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche 1 und 10 umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung bzw. Handhabungsvorrichtung zum Umgang mit in mindestens einer Reihe hintereinander bewegten Stückgütern. Wenn daher im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von horizontaler Richtung zu einem Bewegungsraum befördert, wo jedes einzelne zu bewegende Stückgut oder Gebinde mittels einer zumindest in horizontaler Richtung beweglichen und/oder rotierbaren Manipulationseinrichtung an wenigstens einer Seitenfläche kontaktiert und verschoben und/oder gedreht wird.

Die WO 2015/014559 A1 betrifft eine Vorrichtung zum Palettieren, welcher Gebinde über ein Zuführelement zugeführt werden, und welche ein von einer Eingangsseite in Richtung zu einer Ausgangsseite orientiert förderndes Förderband sowie zumindest ein Ausrichtförderelement aufweist.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen.

Angesichts des bekannten Standes der Technik kann es als Ziel der vorliegenden Erfindung angesehen werden, eine exakte und positionsgenaue Verarbeitung und Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in Reihe hintereinander bewegten Stückgüter können dabei je nach Anforderung von nachfolgenden Handhabungsvorrichtungen gleich oder unterschiedlich ausgebildet sein.

Die in einer Reihe ohne Abstände bewegten und/oder zu einem ― insbesondere Manipulationsbereich bzw. Erfassungsbereich genannten ― Bereich beförderten, mindestens zwei unmittelbar aufeinanderfolgenden Stückgüter werden als geschlossene Formation transportiert. Mit dem Begriff der geschlossenen Formation ist eine weitgehend lückenlose Aufeinanderfolge von Stückgütern gemeint, die in einer Reihe hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. In der geschlossenen Formation können die Stückgüter insbesondere Stoß an Stoß transportiert werden. Dies wird beispielsweise durch einen einmalig aufgebrachten Staudruck von hinten verursacht. Der Staudruck wird dabei vorzugsweise vor oder kurz vor dem Erfassungsbereich des mindestens einen Manipulators der Handhabungsvorrichtung erzeugt. Alternativ kann vorgesehen sein, dass dauerhaft zumindest ein leichter Staudruck von hinten auf die Stückgüter einwirkt.

Aus der jeweils geschlossenen Formation wird im Erfassungsbereich bzw, Bewegungsraum eines Manipulators wenigstens ein transportiertes Stückgut klemmend und/oder kraftschlüssig und/oder formschlüssig erfasst, von den nachfolgenden Stückgütern der geschlossenen Formation räumlich abgetrennt und in eine definierte relative Zielposition und/oder Zielausrichtung gegenüber nachfolgenden Stückgütern der Formation gebracht. Dies erfolgt insbesondere in einem kontinuierlichen Prozess, bei dem die Zufuhr nachfolgender Stückgüter nicht unterbrochen wird, sondern kontinuierlich fortgeführt wird, Hierbei werden zumindest Raumkoordinaten und/oder eine Position des in Transportrichtung zuvorderst befindlichen Stückgutes der zum Erfassungsbereich transportierten geschlossenen Formation sensorisch erfasst und einer Steuer- und/oder Auswerteeinheit als Positionswert zur Verfügung gestellt. Vorzugsweise werden Raumkoordinaten und/oder eine Position wenigstens einer in Transportrichtung nach vorne weisenden Umrisskante der zum Erfassungsbereich transportierten geschlossene Formation sensorisch erfasst und einer Steuer- und/oder Auswerteeinheit als Positionswert zur Verfügung gestellt.

Bei der lückenlosen Zuführung der Stückgüter können prozessbedingt kleine Lücken zwischen den Stückgütern auf der Transporteinrichtung entstehen. Wenn sich solche Lücken aufsummieren, besteht insbesondere die Gefahr, dass sich die einlaufenden Stückgüter in Relation zu der definierten Aufnahmeposition des Manipulators verschieben, so dass der Manipulator das jeweilig zu erfassende mindestens eine Stückgut bzw. die jeweilig zu erfassende Gruppe von Stückgütern nicht mehr korrekt greifen kann und es gegebenenfalls zu einer Fehlfunktion der Handhabungsvorrichtung kommt. Um dies zu verhindern, werden die sensorisch ermittelten Daten verwendet, um den Manipulator während des laufenden Verfahrens immer wieder neu zu kalibrieren und auszurichten. Insbesondere erfolgt eine Bewegungssteuerung des wenigstens einen Manipulators im Erfassungsbereich zur Erfassung des wenigstens einen Stückgutes und zu seiner räumlichen Abtrennung von der geschlossenen Formation auf Grundlage der von der Steuer- und/oder Auswerteeinheit gelieferten Koordinaten- und/oder Positionswerte für das jeweils zuvorderst befindliche Stückgut der geschlossenen Formation und/oder dessen nach vorne weisender Umrisskante. Dies ist vorzugsweise im Rahmen einer Echtzeitkorrektur möglich, d.h., die Position des Manipulators wird jeweils anhand der Koordinaten- und/oder Positionswerte des zuvorderst ankommenden zu greifenden Stückgutes der Formation berechnet und angepasst. Sollen weiter hinten in der Formation einlaufende Stückgüter gegriffen werden, so dass durch Verschieben der gegriffenen Stückgüter in Flucht zur Transportrichtung der Formation diese, sowie alle vor diesen befindlichen Stückgüter gemeinsam verschoben werden, so kann die Position des zuvorderst befindlichen Stückgutes, auch wenn dieses nicht gegriffen wird, ebenfalls zur Echtzeitkorrektur der Position des Manipulators verwendet werden.

Gemäß einer alternativen Ausführungsform werden die ermittelten Daten für die Korrektur beim Abgreifen der Stückgüter nicht direkt im anschließenden Verfahrensschritt verwendet, sondern erst in einem später folgenden Verfahrensschritt. Dies kann notwendig sein, wenn die Steuer- und/oder Auswerteeinheit bereits das Bewegungsprofil des Manipulators für den direkt nachfolgenden Verfahrensschritt berechnet hat.

Insbesondere werden jeweils zuvorderst befindlichen Stückgüter der zum Erfassungsbereich transportierten geschlossenen Formation und/oder die jeweiligen Raumkoordinaten und/oder Positionen der in Transportrichtung nach vorne weisenden Umrisskanten der zum Erfassungsbereich transportierten geschlossenen Formation permanent und/oder in zyklischer Folge und/oder in unregelmäßiger Folge erfasst und der Steuer- und/oder Auswerteeinheit als Positionswerte zur Verfügung gestellt.

Vorzugsweise werden die Bewegungssteuerungen des wenigstens einen Manipulators anhand der jeweiligen Erfassung wenigstens eines zuvorderst in der geschlossenen Formation befindlichen Stückgutes, insbesondere einer nach vorn weisenden Umrisskante des zuvorderst angeordneten Stückgutes, im Erfassungsbereich auf Grundlage der von der Steuer- und/oder Auswerteeinheit gelieferten Koordinaten- und/oder Positionswerte für das jeweils zuvorderst befindliche Stückgut und/oder dessen nach vorne weisender Umrisskante kalibriert. Gemäß einer Ausführungsform der Erfindung erfolgt dies bei jeder Phase der Erfassung und Aufnahme wenigstens eines Stückgutes. Gemäß einer alternativen Ausführungsform der Erfindung erfolgt dies bei definierten, durch Phasen ohne Neukalibrierung voneinander getrennten Phasen der Erfassung und Aufnahme des wenigstens einen Stückgutes.

Die Ermittlung der Daten erfolgt vorzugsweise sensorisch. Hierbei kann vorgesehen sein, dass zumindest ein Abschnitt des Erfassungsbereiches des Manipulators und/oder eines Bewegungsraumes des wenigstens einen Manipulators mittels wenigstens einer Sensoreinrichtung zur Gewinnung von Raumkoordinaten und/oder Positions- und/oder Umrissdaten des wenigstens einen in Transportrichtung zuvorderst transportierten Stückgutes der geschlossen einlaufenden Formation erfasst und überwacht wird.

Vorzugsweise erfasst die Sensoreinrichtung zumindest einen keilförmigen räumlichen Bereich, der sich oberhalb der geschlossenen Formation und mit sich öffnendem Keilwinkel in Richtung zur Transportrichtung und/oder in Richtung zum Erfassungsbereich erstreckt. Alternativ kann sich der öffnende Keilwinkel auch entgegen der Transportrichtung der geschlossenen Formation erstrecken. Bei beiden Ausführungsformen erfasst die Sensoreinrichtung jeweils vorzugsweise die vordere Oberkante des zuvorderst befindlichen Stückgutes der geschlossenen Formation.

Erfindungsgemäß werden wenigstens zwei parallele Reihen mit jeweils hintereinander bewegten Stückgütern als wenigstens zwei geschlossene Formationen zum Erfassungsbereich des wenigstens einen Manipulators transportiert, wobei die Bewegungssteuerung des wenigstens einen Manipulators im Erfassungsbereich zur Erfassung jeweils wenigstens eines Stückgutes von einer der wenigstens zwei geschlossenen Formationen und zur räumlichen Abtrennung des Stückgutes von der jeweiligen geschlossenen Formation auf Grundlage der von der Steuer- und/oder Auswerteeinheit gelieferten und aus Sensordaten der wenigstens einen Sensoreinrichtung gewonnenen Koordinaten- und/oder Positionswerte für das jeweils zuvorderst befindliche Stückgut der geschlossenen Formation und/oder dessen nach vorne weisender Umrisskante erfolgt.

Das Verfahren kann in vorteilhafter Weise realisiert werden, indem die Manipulationsschritte zur Erfassung und Positionierung der Stückgüter über einen bestimmten und vorzugsweise als Deltakinematik- Roboter oder Parallelkinematik-Roboter ausgebildeten Manipulator oder einen Teil eines Deltakinematik-Roboters oder Parallelkinematik-Roboter bildenden Manipulators umgesetzt werden.

Der beschriebene Verfahrensschritt bzw. die zuvor beschriebenen Verfahrensschritte oder auch einzelne der zuvor beschriebenen Verfahrensschritte erfolgen insbesondere mittels einer erfindungsgemäßen Vorrichtung, insbesondere mittels einer Handhabungsvorrichtung, die dem Umgang mit in mindestens einer Reihe von hintereinander bewegten Stückgütern dient/dienen, welche Vorrichtung wenigstens eine erste Transporteinrichtung und mindestens einen Manipulator umfasst. Die wenigstens eine erste Transporteinrichtung dient der Zuführung der in mindestens einer Reihe zueinander unmittelbar aufeinanderfolgenden, ohne Beabstandung als geschlossene Formation angeordneten bzw. bewegten, Stückgüter zu einem Erfassungsbereich des mindestens einen Manipulators. Bei der ersten Transporteinrichtung handelt es sich beispielsweise um einen Horizontalförderer, insbesondere ein Horizontalförderband. Von der ersten Transporteinrichtung gelangen die Stückgüter auf eine weitere, insbesondere fluchtende Horizontalfördereinrichtung, auf welcher sie durch den Manipulator der Handhabungsvorrichtung innerhalb seines Erfassungsbereiches erfasst und insbesondere auch freigegeben werden. Die Horizontalfördereinrichtung und der Manipulator bilden insbesondere das Gruppiermodul der Handhabungsvorrichtung mit dem Erfassungsbereich, in dem die jeweiligen Stückgüter durch den Manipulator erfasst und insbesondere auch freigegeben werden.

Der mindestens eine Manipulator ist typischerweise und/oder vorzugsweise zum klemmenden und/oder formschlüssigen und/oder kraftschlüssigen Erfassen und/oder Entgegennehmen jeweils mindestens eines Stückgutes aus der mittels der wenigstens einen Transporteinrichtung in den Erfassungsbereich des Manipulators transportieren geschlossenen Formation ausgebildet. Weiterhin ist der Manipulator zum Abtrennen und selektiven Überführen des mindestens einen erfassten Stückgutes in eine Zielposition und/oder Zielausrichtung ausgebildet.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter parallel zur Transportrichtung der zulaufenden Stückgüter ausgerichtet.

Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Deltakinematik-Roboter bzw. sog. Tripode ausgebildet sind.

Die Handhabungsvorrichtung umfasst weiterhin eine dem Erfassungsbereich und/oder einem Bewegungsraum des wenigstens einen Manipulators zugeordnete Sensoreinrichtung, die zur Gewinnung von Raumkoordinaten und/oder Positions- und/oder Umrissdaten wenigstens eines in Transportrichtung zuvorderst transportierten Stückgutes der geschlossenen Formation vorbereitet und ausgestattet ist. Als Sensoreinrichtung wird beispielsweise mindestens ein optischer Sensor in Form eines Kantenscanners verwendet, der die entsprechenden Raumkoordinaten und/oder Positionswerte für das jeweils zuvorderst befindliche Stückgut der geschlossenen Formation und/oder dessen nach vorne weisender Umrisskante ermittelt und an die Steuer- und/oder Auswerteeinheit übermittelt, damit diese dementsprechend den Bewegungsablauf des Manipulators berechnen und/oder gegebenenfalls anpassen und/oder korrigieren kann. Die Sensoreinrichtung kann auch durch mindestens eine Kamera mit nachgeschalteter Bildauswertung gebildet werden, aus deren Daten die Steuer- und/oder Auswerteeinheit Raumkoordinaten und/oder Positionswerte für das jeweils zuvorderst befindliche Stückgut der geschlossenen Formation und/oder dessen nach vorne weisender Umrisskante gewinnt bzw. ableiten kann. Die genannten Sensoreinrichtungen sind beispielhaft zu verstehen. Grundsätzlich können jedoch auch andere Sensorvarianten zum Einsatz kommen, so bspw. Ultraschallsensoren o. dgl. Weitere geeignete Sensoren können vom Fachmann ebenfalls vorteilhaft eingesetzt werden.

Die Erfindung sieht insbesondere vor, dass der wenigstens eine Manipulator und/oder seine Bewegungssteuerung zumindest während der Erfassung des wenigstens einen Stückgutes und der räumlichen Abtrennung des wenigstens einen Stückgutes von der geschlossenen Formation mittels der von der Steuer- und/oder Auswerteeinheit gelieferten Koordinaten- und/oder Positionswerten für die jeweils zuvorderst befindlichen Stückgüter der geschlossenen Formation und/oder deren nach vorne weisender Umrisskanten kalibriert wird.

Die sensorisch ermittelten Werte dienen insbesondere der selektiven Ansteuerung, Aktivierung und/oder Bewegung der Klemm- oder Greifmittel des Manipulators durch eine Steuer- und/oder Auswerteeinheit der Handhabungsvorrichtung.

Die Steuer- und/oder Auswerteeinheit der Handhabungsvorrichtung steuert insbesondere allgemein die Bewegung des Manipulators und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Bei der Steuer- und/oder Auswerteeinheit kann es sich insbesondere um eine elektronische und/oder programmierbare Steuer- und/oder Auswerteeinheit wie beispielsweise eine SPS handeln. In dieser können unterschiedliche Steuervorschriften und/oder Steuerdaten abgelegt sein, mit welchen jeweils unterschiedliche Stückgüter - beispielsweise Sechser- Gebinde und Vierer-Gebinde - geklemmt, freigegeben und/oder auf sonstige Weise gehandhabt und/oder bewegt werden können. Die Steuer- und/oder Auswerteeinheit kann insbesondere folgende Rezepte / Daten bzw. Steuervorschriften und/oder -daten enthalten:
- unterschiedliche Zielpositionen und/oder Zielausrichtungen, insbesondere ob die Stückgüter mit Rotation oder ohne Rotation in die Zielpositionen und/oder Zielausrichtungen gelangen und/oder
- Informationen zum Ziel- Lagenschema, d.h. Anordnung der Stückgüter in Relation zueinander in der jeweiligen Ziellage und/oder
- Anzahl der Formationen im Zulauf der Vorrichtung, insbesondere einreihiger oder mehrreihiger Zulauf von Stückgütern etc.

Die vorliegende Erfindung dient im Wesentlichen der ständigen und/oder zyklisch oder unregelmäßig wiederkehrenden Kalibrierung eines Manipulators einer Handhabungsvorrichtung, wie sie zuvor beschrieben wurde. Die zu handhabenden und zu positionierenden Stückgüter werden in Reihen jeweils unmittelbar aufeinanderfolgend, ohne Beabstandung als geschlossene Formationen in den Erfassungsbereich des Manipulators transportiert. Der Manipulator kann bspw. maximal zwei, drei oder mehr einlaufende Stückgüter erfassen. Diese Stückgüter können beispielsweise 2x3 durch eine Umverpackung zusammengefasste Getränkebehälter o.ä. umfassen.

Die für das Kalibrierverfahren eingesetzte Sensor- bzw. Detektionseinrichtung befindet sich normalerweise oberhalb der Transportebene für die Stückgüter. Die Detektionseinrichtung ist derart ausgebildet, dass sie zumindest eine Raumkoordinate und/oder Position des in Transportrichtung zuvorderst befindlichen Stückgutes der Formation bzw. Reihe innerhalb eines Detektionsbereichs erfassen kann. Insbesondere kann die Detektionseinrichtung eine nach vorn weisende Umrisskante des zuvorderst angeordneten Stückgutes der geschlossenen Formation erfassen, und zwar vorzugsweise die obere Vorderkante des zuvorderst angeordneten Stückgutes der geschlossenen Formation.

Die ermittelte Raumkoordinate und/oder die auf optischem Wege erfasste Position des jeweiligen Stückguts kann einer entsprechend ausgestatteten Steuerungseinrichtung zur Verfügung gestellt werden, die darauf basierend die Bewegungssteuerung des Manipulators im Erfassungsbereich der Handhabungsvorrichtung berechnet und den Manipulator entsprechend zur Erfassung des wenigstens einen Stückgutes oder der zwei oder mehr Stückgüter und zur räumlichen Abtrennung desselben bzw. derselben von der geschlossenen Formation ansteuert, und dies vorzugsweise für den folgenden oder auch für den übernächsten Erfassungsvorgang.

Die Sensoreinrichtung bzw. die Detektionseinrichtung kann insbesondere einen keilförmigen räumlichen Bereich bzw. Detektionsbereich erfassen und abdecken, der sich insbesondere oberhalb der geschlossenen Formation und mit sich öffnendem Keilwinkel in Richtung zur Transportrichtung und/oder in Richtung zum Erfassungsbereich erstrecken kann. Derartige Kantenscanner, wie sie für das erfindungsgemäße Verfahren als Detektionseinrichtungen eingesetzt werden können, sind auf diese Weise in der Lage, sehr präzise Ortskoordinaten der solchermaßen erfassten Objekte zu liefern, die für eine ständige Neukalibrierung des Manipulators verwendet werden können.

Die Vorrichtung kann alternativ oder zusätzlich zu den beschriebenen Merkmalen ein oder mehrere Merkmale und/oder Eigenschaften des zuvor beschriebenen Verfahrens umfassen. Ebenfalls kann das Verfahren alternativ oder zusätzlich einzelne oder mehrere Merkmale und/oder Eigenschaften der beschriebenen Vorrichtung aufweisen.

Ein besonderer Vorteil des erfindungsgemäßen Verfahrens und/oder der erfindungsgemäßen Vorrichtung liegen darin, dass der Sensor gute, zuverlässige Werte liefert, an denen der Bewegung des Manipulators schnell angepasst werden kann, so dass Fehler durch ein Aufsummieren von kleinen ungewünschten Lücken zwischen Stückgütern in der Formation direkt korrigiert werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 21 zeigen schematisch und in Draufsicht einen zeitlichen Ablauf einer ersten Ausführungsvariante eines erfindungsgemäßen Verfahrens zum Umgang mit in einer Mehrzahl von parallelen Reihen hintereinander bewegten Stückgütern durch eine entsprechende Handhabungsvorrichtung.

Fig. 22 zeigt schematisch und in Draufsicht eine alternative Anordnung zur Durchführung einer zweiten Ausführungsvariante des erfindungsgemäßen Verfahrens mittels einer entsprechend ausgestatteten Handhabungsvorrichtung.

Figuren 23 bis 30 zeigen schematisch und in seitlicher Darstellung einen zeitlichen Ablauf einer Ausführungsvariante eines erfindungsgemäßen Verfahrens zum Umgang mit in einer Reihe hintereinander bewegten Stückgütern durch eine entsprechende Handhabungsvorrichtung.

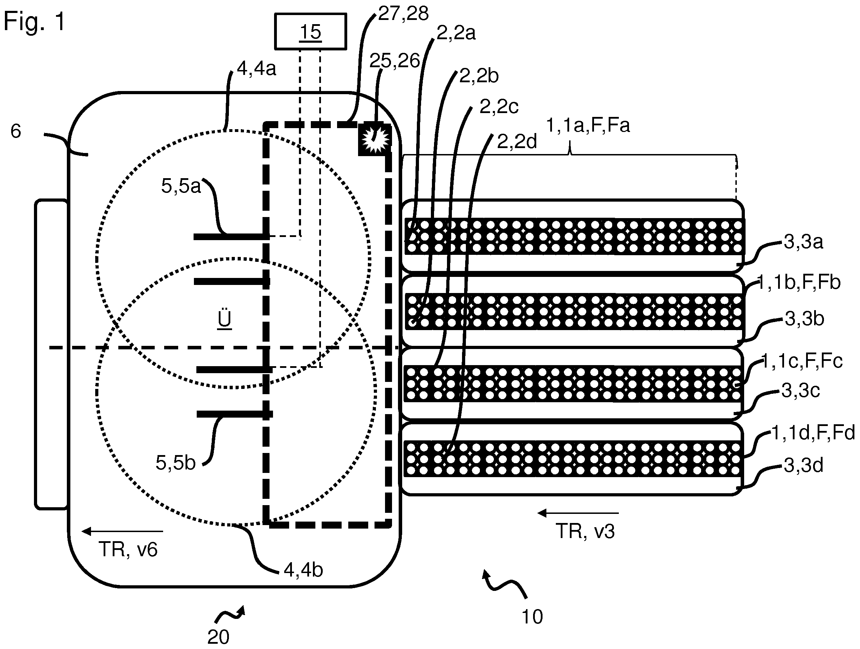

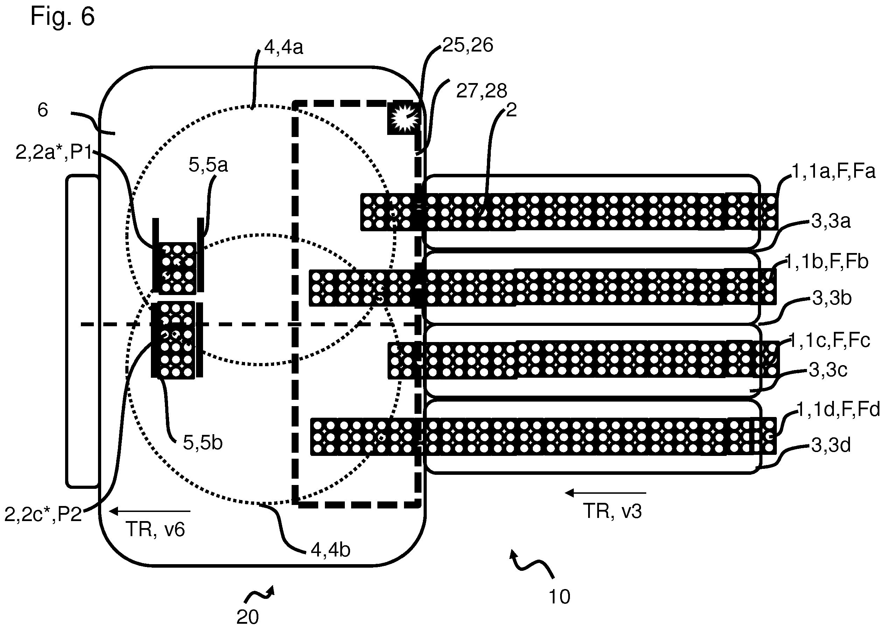

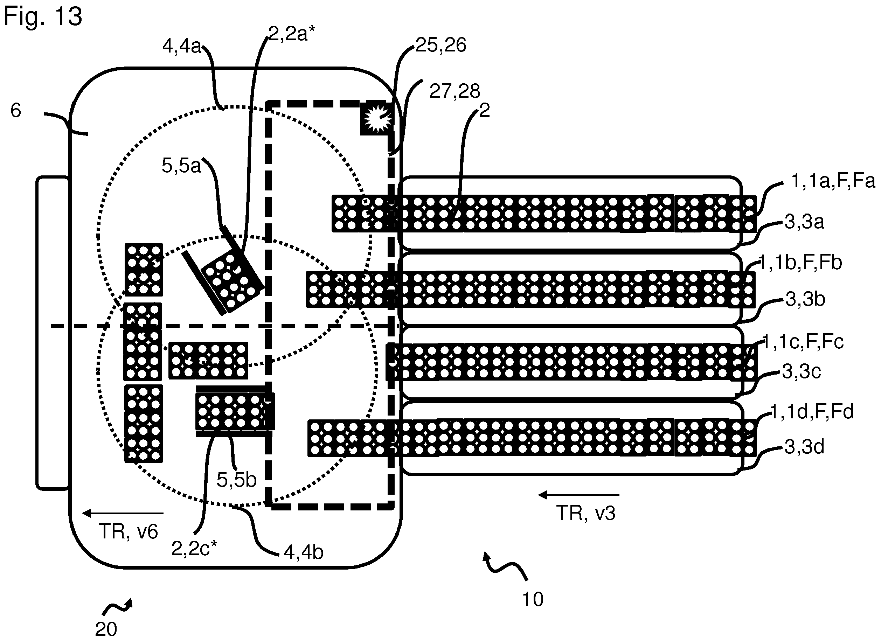

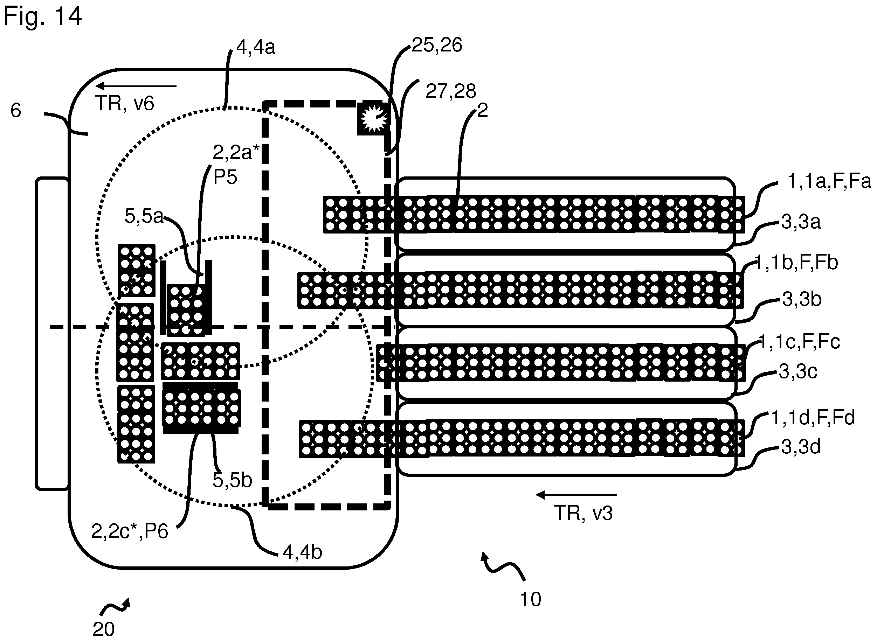

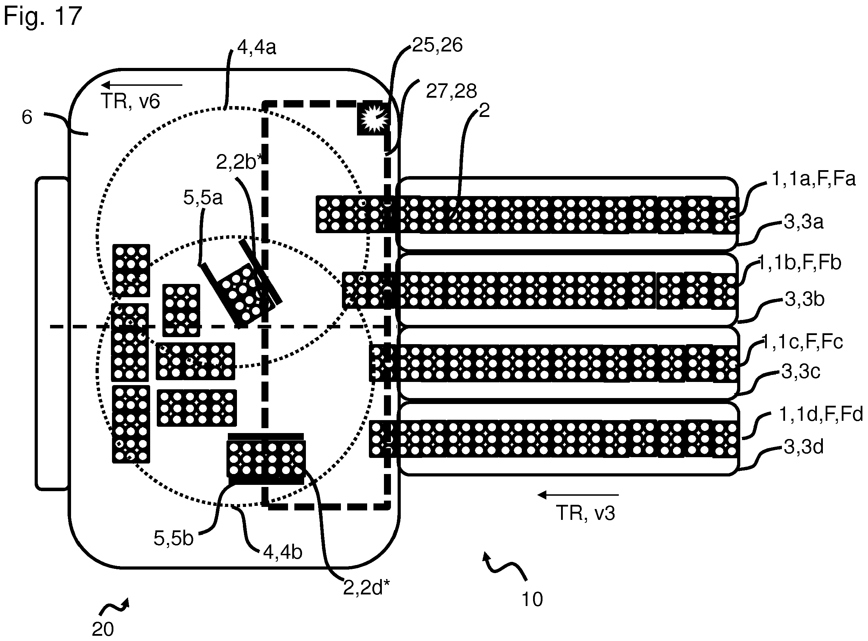

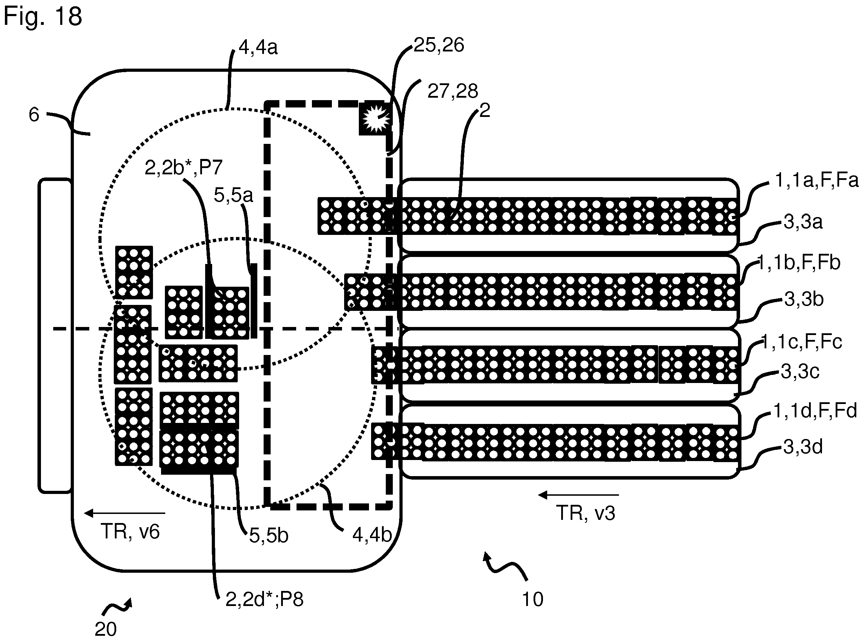

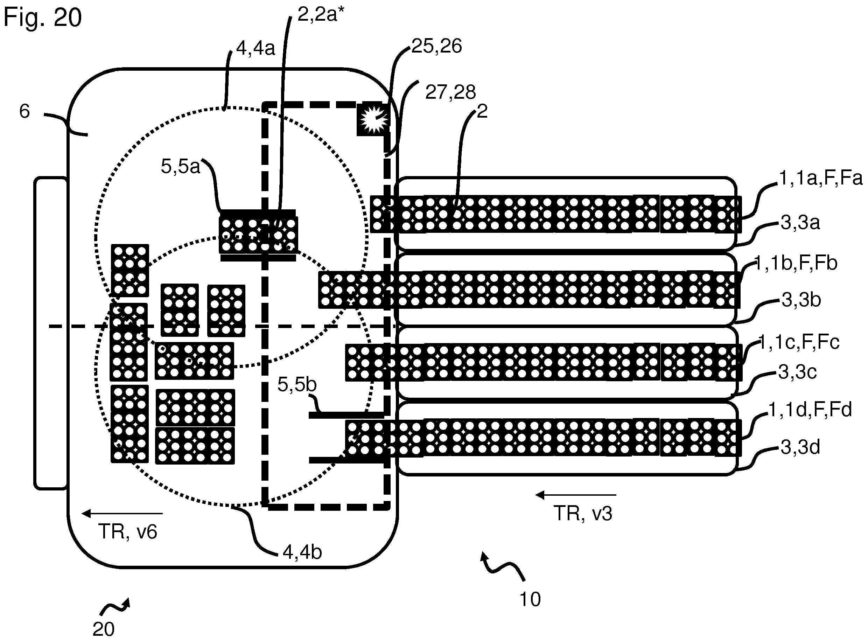

Für gleiche oder gleich wirkende Elemente der Erfindung werden in den Figuren 1 bis 30 jeweils identische Bezugszeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

Die Figuren 1 bis 21 veranschaulichen anhand von schematischen Draufsichten einen zeitlichen Ablauf einer ersten Ausführungsvariante eines erfindungsgemäßen Verfahrens zum Umgang mit in mindestens einer Reihe 1, insbesondere in einer Mehrzahl von parallelen Reihen 1a, 1b, 1c, 1d, hintereinander bewegten Stückgütern 2 durch einen beweg-, verschieb- und/oder rotierbaren Manipulator 5 einer entsprechenden Handhabungsvorrichtung 10. Bei den Stückgütern 2 handelt es sich im dargestellten Ausführungsbeispiel jeweils um Gebinde aus sechs Getränkebehältern, die beispielsweise mit einer Schrumpfverpackung zusammen gehalten werden.

Insbesondere ist vorgesehen, dass mehrere beweg-, verschieb- und/oder rotierbare Manipulatoren 5 und mehrere Transporteinrichtungen 3 mit parallelen Transportrichtungen TR, über welche jeweils unmittelbar aufeinanderfolgende Stückgüter 2 einer jeweiligen Reihe 1 ohne Beabstandung als geschlossene Formation F in Erfassungsbereiche 4 der mehreren Manipulatoren 5 transportierbar sind, so dass sämtliche Erfassungsbereiche 4 der mehreren Manipulatoren 5 jeweils mindestens eine Reihe 1 mit einer geschlossenen Formation F an transportierten Stückgütern 2 erreicht.

Die im Ausführungsbeispiel dargestellte Handhabungsvorrichtung 10 umfasst für den Paralleltransport vier parallel angeordnete erste Transporteinrichtungen 3, 3a, 3b, 3c, 3d, über welche unmittelbar aufeinanderfolgende Stückgüter 2 in einer vier parallelen Reihen 1, 1a, 1b, 1c, 1d unterbrechungsfrei und/oder mit kontinuierlicher Transportgeschwindigkeit v3 in einen Erfassungsbereich 4 mindestens eines Manipulators 5 der Handhabungsvorrichtung 10 transportiert werden.

Erfindungsgemäß umfasst die hier beschriebene Handhabungsvorrichtung 10 zwei Manipulatoren 5, 5a, 5b, die jeweils einen Erfassungsbereich 4a, 4b aufweisen. Beispielsweise sind die Erfassungsbereiche 4a, 4b der zwei Manipulatoren 5a, 5b zumindest bereichsweise senkrecht zu den Transportrichtungen TR der mehreren benachbarten Transporteinrichtungen 3a, 3b, 3c, 3d.

Erfindungsgemäß ist vorgesehen, dass sich die beiden Erfassungsbereiche 4a, 4b in einem Überlagerungsbereich Ü teilweise überlagern. Dieser ist in Fig. 1 beispielhaft benannt. Um die Übersichtlichkeit in den Figuren zu erhöhen, sind nicht alle Bezugszeichen in allen Figuren dargestellt.

Bei dem dargestellten Ausführungsbeispiel ist vorgesehen, dass den zwei parallelen ersten Transporteinrichtungen 3a, 3b ein Erfassungsbereich 4a eines ersten Manipulators 5a der Handhabungsvorrichtung 10 zugeordnet ist, und dass den zwei parallelen zweiten Transporteinrichtungen 3c, 3d ein Erfassungsbereich 4b eines zweiten Manipulators 5b der Handhabungsvorrichtung 10 zugeordnet ist. Es kann aber auch zu weiteren Überschneidungen kommen, so dass beispielsweise auch der Manipulator 5b auf von der Transporteinrichtung 3b bewegte Stückgüter 2, 2b zugreifen kann. D.h., gemäß einer Ausführungsform der Erfindung können mittels mindestens einer der mehreren Transporteinrichtungen 3 unmittelbar aufeinanderfolgende Stückgüter 2 der jeweiligen Reihe 1 ohne Beabstandung als geschlossene Formation F in den sich überschneidenden Bereich bzw. Überlagerungsbereich Ü der mehreren Manipulatoren 5 transportiert werden.

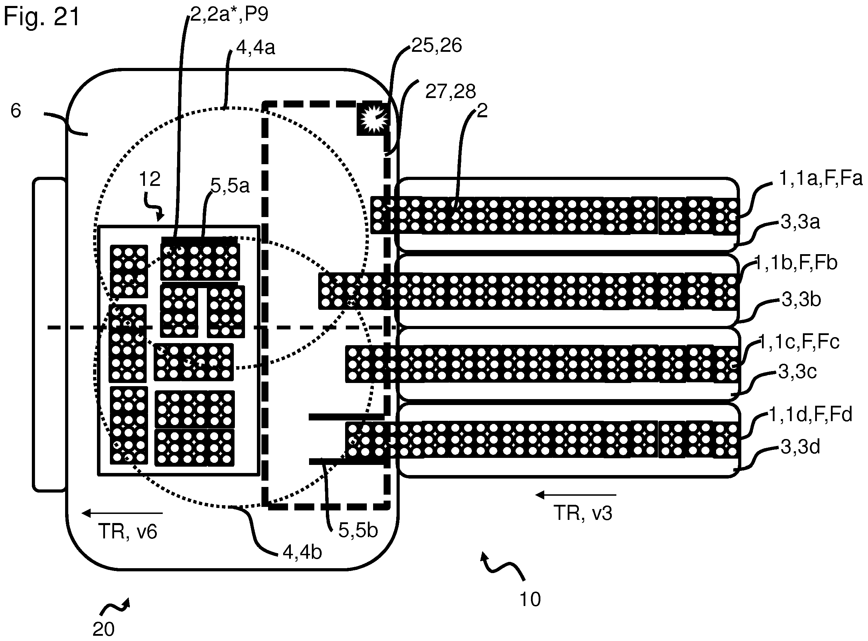

Wichtig ist hierbei, dass das Bewegungsmuster der Manipulatoren 5a, 5b derart aufeinander abgestimmt ist, dass es bei Erfassen und Positionieren der Stückgüter 2 nicht zu einer Kollision der Manipulatoren 5a, 5b kommt. Dies wird insbesondere durch eine in Fig. 1 beispielhaft dargestellte Steuerungseinrichtung 15 erreicht, die mit beiden Manipulatoren 5a, 5b in Verbindung steht. Die Steuerungseinrichtung enthält Informationen zu einer aus einer Vielzahl an Stückgütern 2 zu bildenden Gruppierung für eine palettierfähige Lage 12 (vergleiche Fig. 21). Die jeweiligen Zielpositionen P1 bis P9 und/oder Zielausrichtungen, die durch die von den Manipulatoren 5a, 5b jeweils erfassten Gruppen an Stückgütern 2* bilden einen Teil der Informationen und ordnen dem jeweiligen mindestens einen Stückgut 2* eine bestimmte Lage und/oder relative Orientierung in der jeweiligen Gruppierung zu. Die Manipulatoren 5a, 5b werden entsprechend angesteuert, um jeweils eine definierte Anzahl an Stückgütern 2* zu erfassen und umzupositionieren.

Die Transporteinrichtungen 3a, 3b, 3c, 3d sind beispielsweise jeweils ein Förderband oder eine andere geeignete Fördereinrichtung, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b, 1c, 1d jeweils in einer sogenannten geschlossenen Formation F, Fa, Fb, Fc, Fd in die Erfassungsbereiche 4a, 4b der Manipulatoren 5a, 5b ein.

Weiterhin ist möglich, dass die Stückgüter 2 mehrreihig, insbesondere in mehreren Parallelreihen 1a, 1b, 1c, 1d auf einer einzigen, gemeinsamen Transporteinrichtung 3 (nicht dargestellt) zu den Erfassungsbereichen 4a, 4b der Manipulatoren 5a, 5b hin transportiert werden. Die Parallelreihen 1a, 1b, 1c, 1d können dabei beabstandet zueinander oder weitgehend ohne Abstand zueinander auf der Transporteinrichtung 3 transportiert werden.

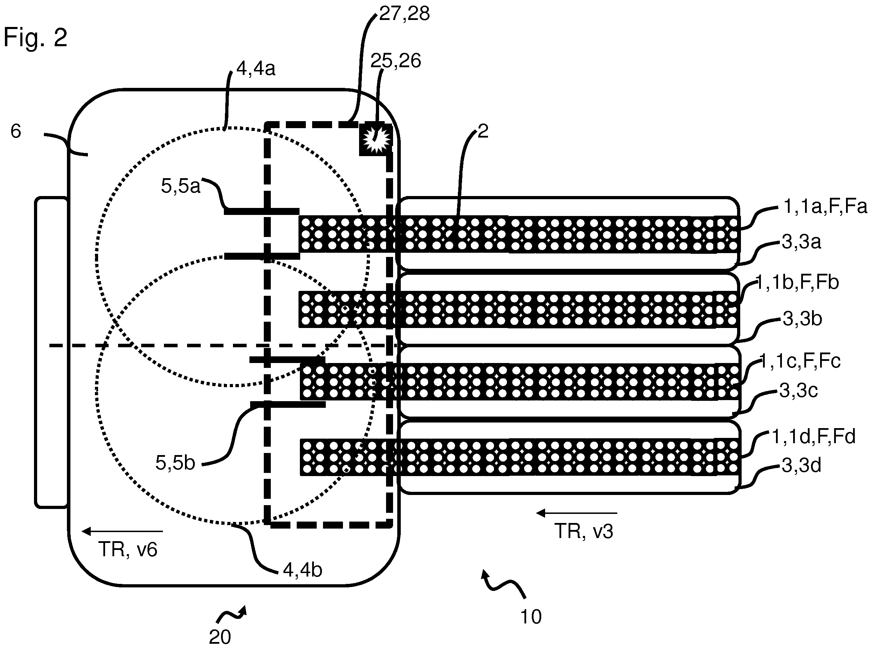

Die schematische Darstellung der Fig. 1 zeigt insbesondere das Einlaufen der Stückgüter 2 in vier parallelen Reihen 1a, 1b, 1c, 1d bzw. in im Wesentlichen lückenlosen Formationen Fa, Fb, Fc, Fd über die Transporteinrichtungen 3a, 3b, 3c, 3d. Figuren 2 bis 21 stellen schematisch einzelne Schritte zur Bildung der Lage 12 dar (vgl. insbesondere Fig. 21).

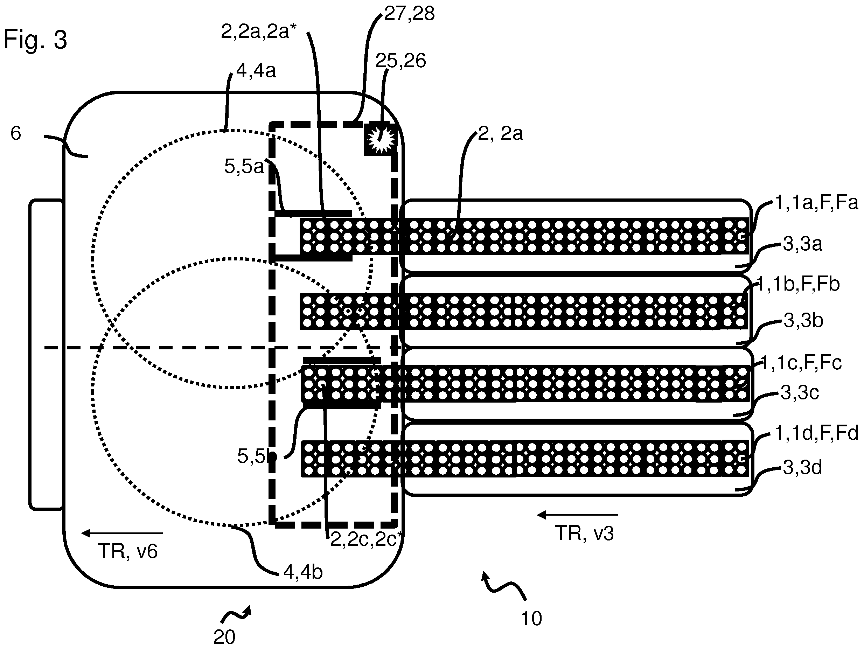

Die Manipulatoren 5a, 5b sind jeweils zum klemmenden und/oder kraft- und/oder formschlüssigen Entgegennehmen von Stückgüter 2, 2* innerhalb ihres Erfassungsbereiches 4a, 4b ausgebildet. Mit dem Sternchen * werden jeweils Stückgüter 2, 2* gekennzeichnet, die durch die Manipulatoren erfasst und manipuliert worden sind. Figuren 2 und 3 zeigen das Heranführen der Manipulatoren 5a, 5b an die kontinulierlich in den Erfassungsbereich 4 einlaufenden Reihen 1a, 1c bzw. Formationen Fa, Fc an Stückgütern 2. In Fig. 3 ist dargestellt, dass der Manipulator 5a die ersten zwei Stückgüter 2a der durch die Transporteinrichtung 3a herangeführten Formation Fa erfasst. Gleichzeitig greift der Manipulator 5b die ersten drei Stückgüter 2c der durch die Transporteinrichtung 3c herangeführten Formation Fc.

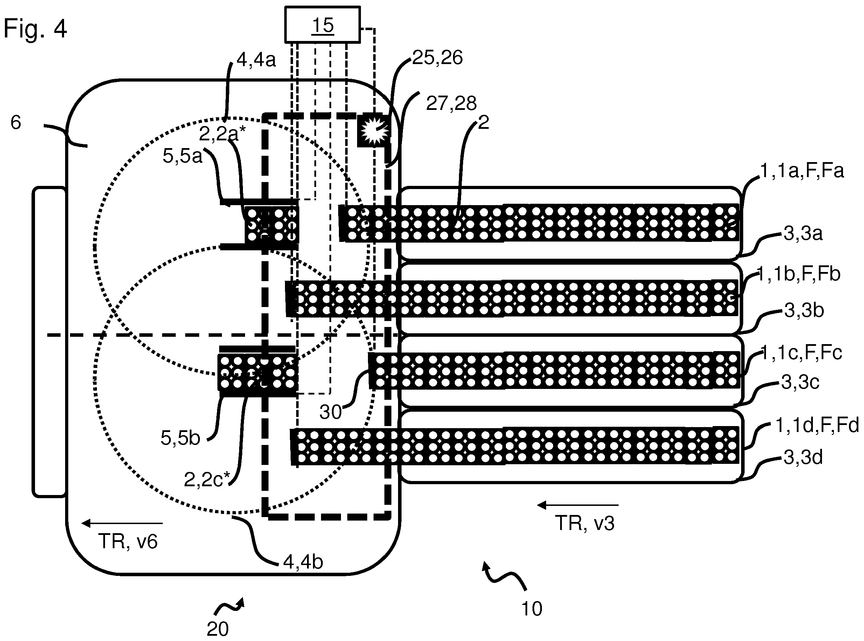

Die von den Manipulatoren 5a, 5b erfassten Stückgüter 2a*, 2c* werden von diesen von der jeweiligen der einlaufenden geschlossenen Formation Fa, Fc abgetrennt und wie in den Figuren 4 bis 6 dargestellt, durch die Manipulatoren 5a, 5b in ihre jeweilige definierte Zielposition P1, P2 und/oder Zielausrichtung überführt.

Dabei werden die Gruppen von zwei Stückgütern 2a* bzw. drei Stückgütern 2c* durch die Manipulatoren 5a, 5b jeweils in Transportrichtung TR von ihrer Formation Fa, Fc und seitlich versetzt zu diesen angeordnet. Zudem werden die Gruppen von Stückgütern 2a*, 2c* jeweils um einen Winkel von 90 Grad gegenüber den Stückgütern 2a, 2c der Formationen Fa, Fc verdreht.

Während die Stückgüter 2a*, 2c* durch die Manipulatoren 5a, 5b in ihre Zielpositionen P1, P2 und Zielausrichtung überführt werden, werden die Formationen Fa, Fb, Fc und Fd weiterhin kontinuierlich und lückenlos in Transportrichtung TR den Erfassungsbereichen 4a, 4b der Handhabungsvorrichtung 10 zugeführt. Weiterhin werden die Stückgüter 2 der Reihen 1 in den Erfassungsbereichen 4a, 4b ohne Unterbrechung und mit unveränderter Transportgeschwindigkeit weitertransportiert. Den Erfassungsbereichen 4a, 4b ist insbesondere eine Horizontalfördereinrichtung 6 zugeordnet, die sich mit einer Geschwindigkeit v6 bewegt. Insbesondere entspricht die Geschwindigkeit v6 der Horizontalfördereinrichtung 6 der Transportgeschwindigkeit v3 der Transporteinrichtungen 3a, 3b, 3c, 3d. Die in parallelen Reihen 1a, 1b, 1c, 1d über die Transporteinrichtungen 3a, 3b, 3c, 3d ankommenden Stückgüter 2 werden durch den Staudruck der nachfolgenden Stückgüter 2 auf die Horizontalfördereinrichtung 6 übergeschoben und dort unterbrechungsfrei weiter befördert.

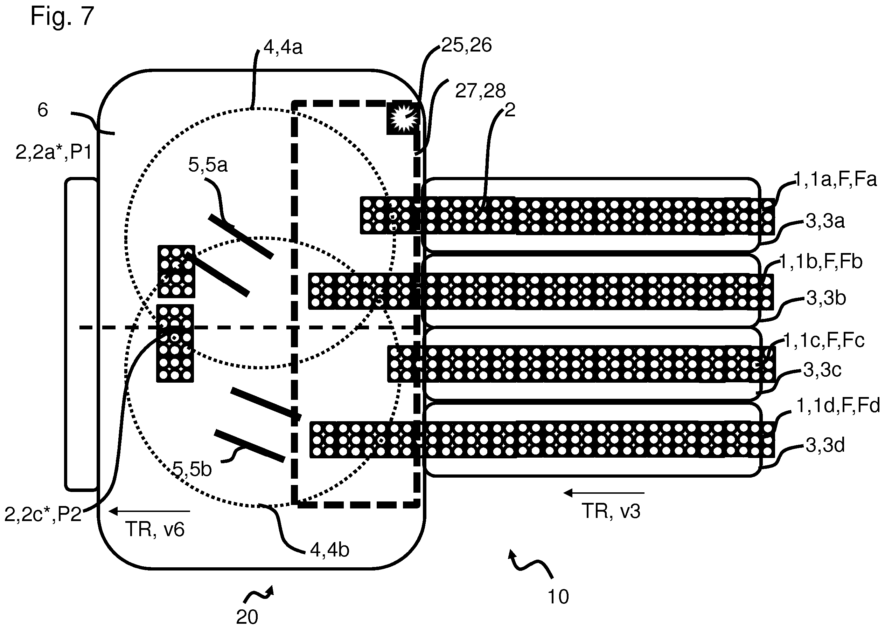

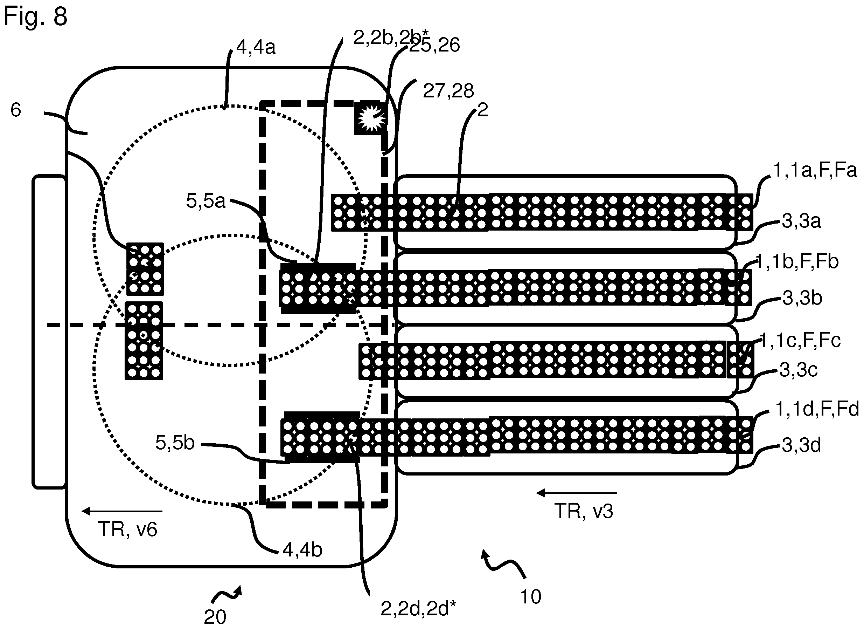

Die schematische Darstellung der Fig. 7 zeigt, dass sich die Manipulatoren 5a, 5b von den an ihre Zielpositionen P1, P2 beförderten Gruppen von Stückgütern 2a*, 2c* lösen, um nunmehr, wie in den Figuren 8 bis 10 dargestellt, weitere Stückgüter 2 aus den einlaufenden Formationen F abzugreifen. Insbesondere erfasst der Manipulator 5a nunmehr drei Stückgüter 2b, 2b* aus der einlaufenden Formation Fb und der der Manipulator 5b erfasst drei Stückgüter 2d, 2d* aus der einlaufenden Formation Fd. Beispielsweise senken sich die Manipulatoren 5a, 5b jeweils von oben über die zu erfassenden Stückgüter 2 ab und greifen diese. Die Manipulatoren 5a, 5b sind jeweils beispielsweise Greiferköpfe mit seitlichen Klemmbacken o.ä., die jeweils an der gewünschten Anzahl an Stückgütern 2 der jeweiligen Formation F ansetzen, diese klemmend und/oder formschlüssig erfassen und von der jeweiligen Formation F abtrennen.

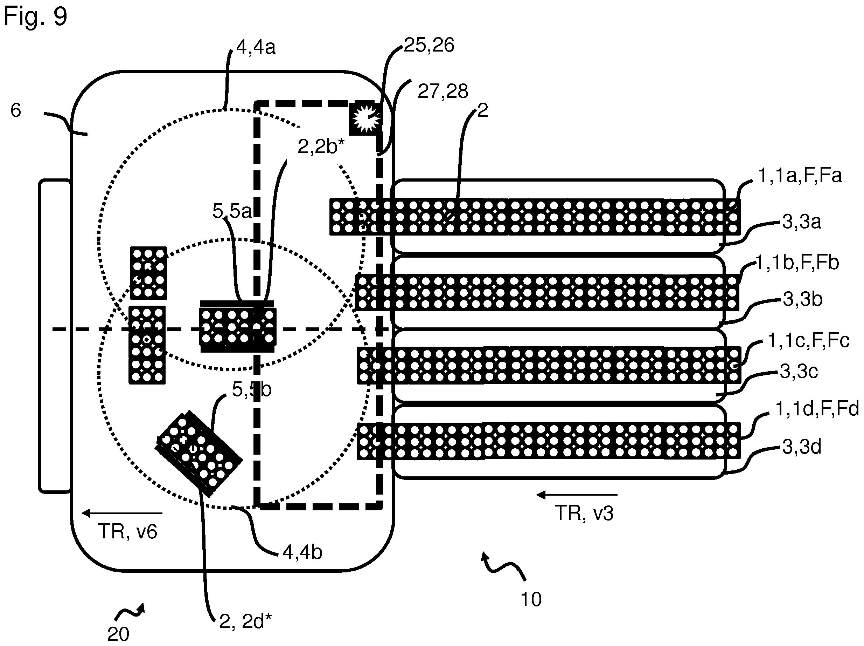

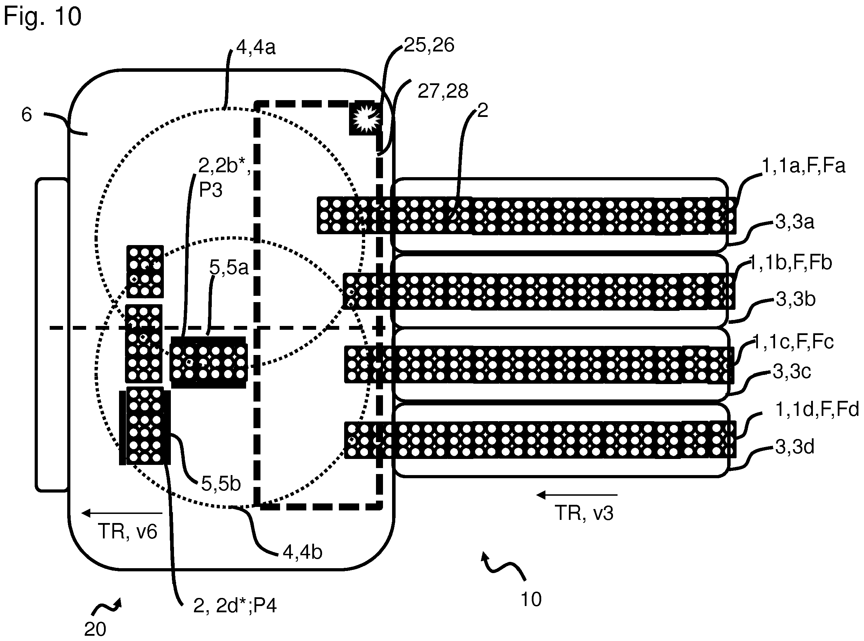

Die Figuren 9 und 10 zeigen das Überführen der Gruppen aus jeweils drei Stückgütern 2b* und 2d* in ihre jeweiligen Zielpositionen P3, P4 (vergleiche Fig. 10). Bei der gezeigten Variante wird die Gruppe von drei Stückgütern 2b* in Transportrichtung TR von ihrer Formation Fb und seitlich versetzt zu dieser angeordnet bzw. positioniert. Die Gruppe von drei Stückgütern 2c* wird in Transportrichtung TR von ihrer Formation Fc und seitlich versetzt zu dieser positioniert bzw. angeordnet; zudem wird die Gruppe von drei Stückgütern 2c* durch den Manipulator 5b um 90° gedreht.

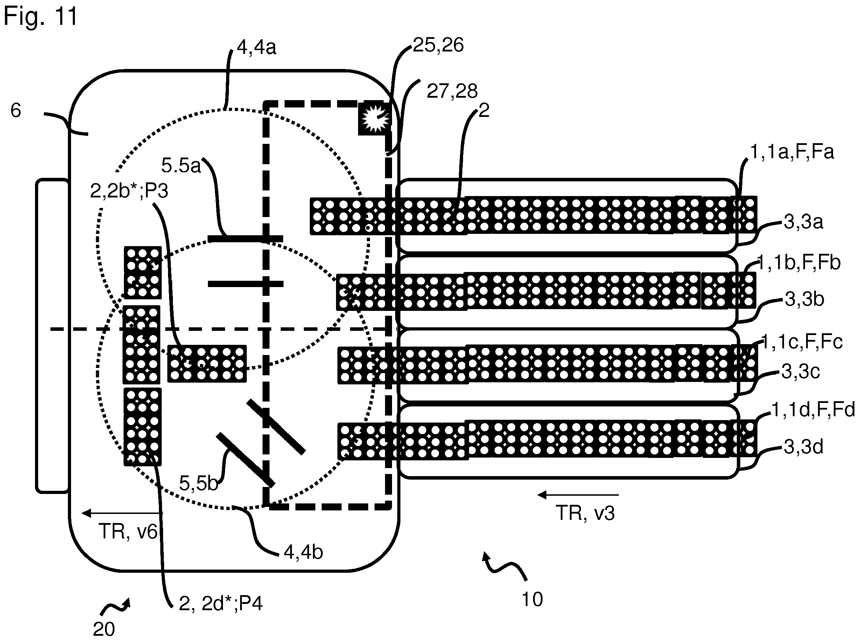

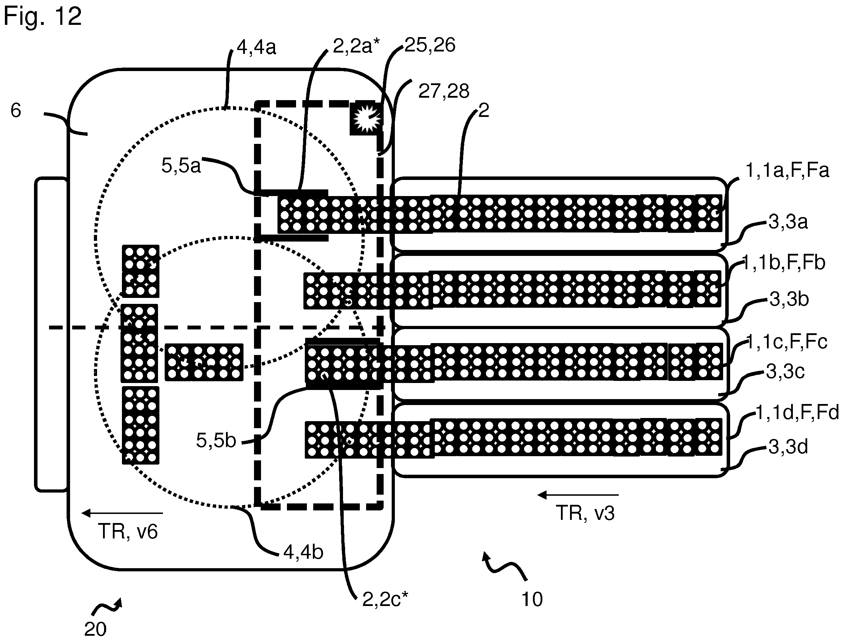

Die schematische Darstellung der Fig. 11 zeigt zudem, dass sich die Manipulatoren 5a, 5b von den an ihre Zielpositionen P3, P4 beförderten Gruppen von Stückgütern 2b*, 2d* lösen, um nunmehr, wie in den Figuren 12 bis 14 dargestellt, weitere Stückgüter 2 aus den einlaufenden Formationen F abzugreifen. Insbesondere erfasst der Manipulator 5a zwei Stückgüter 2a, 2a* aus der einlaufenden Formation Fa; der Manipulator 5b erfasst drei Stückgüter 2c, 2c* aus der einlaufenden Formation Fc. Die Manipulatoren 5a und 5b überführen die jeweils erfassten Stückgüter 2a, 2a* bzw. 2c, 2c* in die jeweiligen Zielpositionen P5 bzw. P6. Hierbei wird die Gruppe von drei Stückgütern 2c* in Transportrichtung TR von ihrer entsprechenden Formation Fc und seitlich gegebenenfalls leicht versetzt zu dieser positioniert bzw. angeordnet. Die Gruppe von zwei Stückgütern 2a* wird in Transportrichtung TR von ihrer Formation Fa und seitlich versetzt zu dieser positioniert bzw. angeordnet. Darüber hinaus bzw. in überlagerter Beeinflussung zur seitlichen Versetzung wird die die Gruppe von zwei Stückgütern 2a* durch den Manipulator 5a um 90° gedreht.

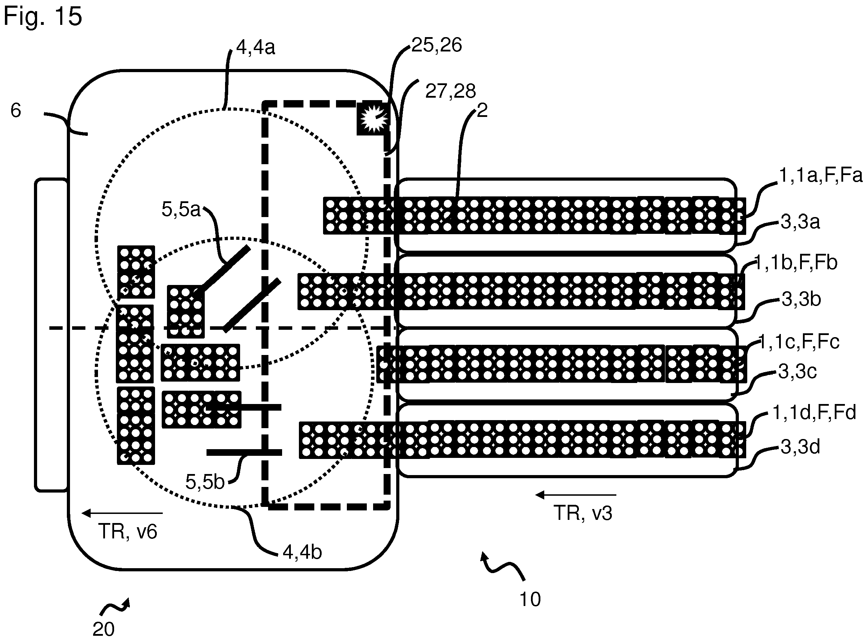

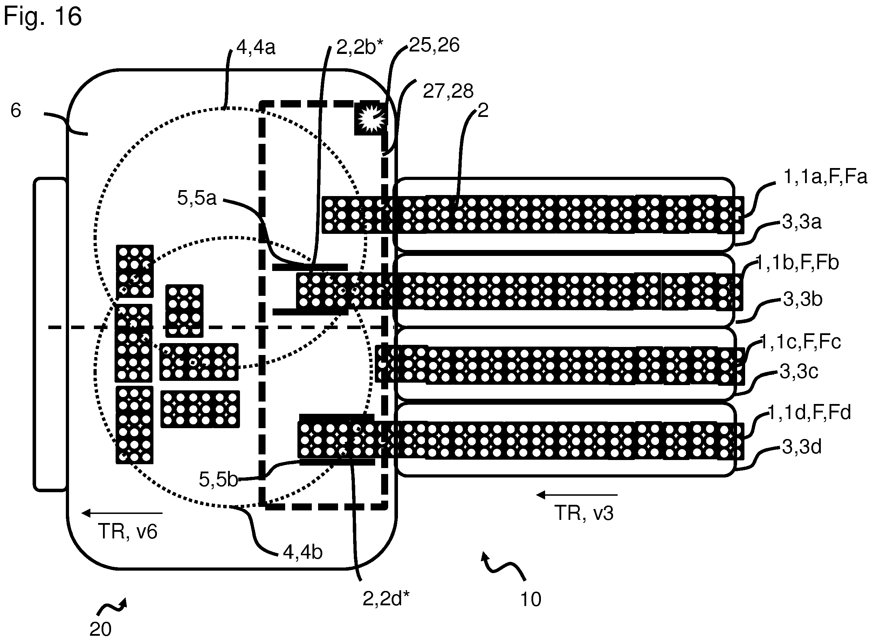

Weiterhin zeigt die schematische Darstellung der Fig. 15, dass sich die Manipulatoren 5a, 5b von den an ihre Zielpositionen P5, P6 beförderten Gruppen von Stückgütern 2a*, 2c* lösen, um nunmehr, wie in den Figuren 16 bis 18 dargestellt, weitere Stückgüter 2 aus den einlaufenden Formationen F abzugreifen. Insbesondere erfasst der Manipulator 5a wiederum nur zwei Stückgüter 2b* aus der einlaufenden Formation Fb und der Manipulator 5b erfasst drei Stückgüter 2d* aus der einlaufenden Formation Fd und überführen diesen in Zielpositionen P7, P8. Hierbei wird die Gruppe von drei Stückgütern 2d* in Transportrichtung TR von ihrer Formation Fd und seitlich gegebenenfalls leicht versetzt zu dieser angeordnet. Die Gruppe von zwei Stückgütern 2b* wird in Transportrichtung TR von ihrer Formation Fb und seitlich versetzt zu dieser positioniert bzw. angeordnet. Zudem wird die Gruppe von zwei Stückgütern 2b* durch den Manipulator 5a um 90° gedreht.

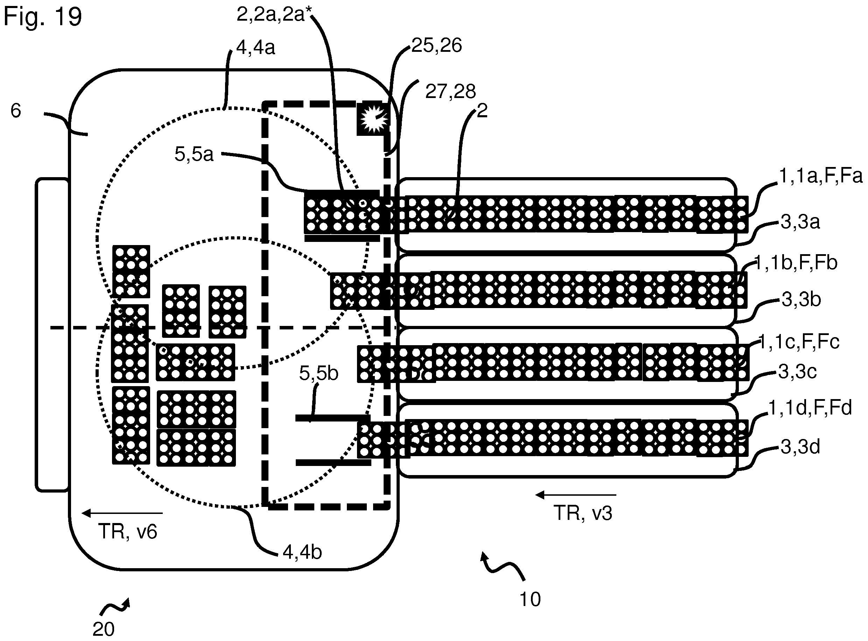

Anschließend lösen sich die Manipulatoren 5a, 5b von den an ihre Zielpositionen P7, P8 beförderten Gruppen von Stückgütern 2b*, 2d*, um nunmehr, wie in den Figuren 19 bis 21 dargestellt, weitere Stückgüter 2 aus den einlaufenden Formationen F abzugreifen. Insbesondere erfasst nur der Manipulator 5a drei Stückgüter 2a* aus der einlaufenden Formation Fa und überführt diese in die Zielposition P9. Die in ihren Zielpositionen P1 bis P9 angeordneten Stückgutgruppen bilden nunmehr eine Lage 12, die beispielsweise von einer nachfolgend angeordneten Palettierstation auf eine Palette überführt werden kann (nicht dargestellt). Währenddessen positioniert sich der Manipulator 5b bereits im Bereich der einlaufenden Formation Fd, um direkt mit der Ausbildung einer weiteren Lage 12 beginnen zu können.

Aus den Figuren 1 bis 21 ist deutlich zu erkennen, dass die einmal durch einen Manipulator 5a, 5b erfassten Stückgüter 2* jeweils in einem einzigen, insbesondere unterbrechungsfreien, Manipulationsschritt in ihre jeweilige die Zielposition P1 bis P9 und/oder Zielausrichtung überführt, geschoben und/oder gedreht werden.

Hierbei kann vorgesehen sein, dass der Manipulator 5a, 5b die jeweils erfassten Stückgüter 2* beispielsweise anhebt, zur Zielposition befördert und auf der Horizontalfördereinrichtung 6 innerhalb des Erfassungsbereiches 4 wieder absetzt. Alternativ kann vorgesehen sein, dass der Manipulator 5a, 5b die Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt.

Bei den hier beschriebenen Manipulationsschritten ist insbesondere vorgesehen, dass sich der Manipulator 5a, 5b zumindest beim Erfassen der zwei Stückgüter 2* und bei deren Freigabe in der Zielposition und Zielausrichtung mit einer Geschwindigkeit bewegt, die annähernd bzw. exakt der Transportgeschwindigkeit v3 entspricht, mit der sich die geschlossene Formation F der Stückgüter 2 bewegt.

Die Zielposition stellt insbesondere eine Relativposition gegenüber der jeweiligen Ausgangsformation F dar. Da sich die jeweilige Transporteinrichtung 3 und somit die jeweilige Formation F mit derselben Geschwindigkeit bewegen wie die Horizontalfördereinrichtung 6, bleibt der relative Abstand zwischen den Stückgütern 2* in der jeweiligen Zielposition und einem noch nicht vom Manipulator erfassten Stückgut der jeweiligen Formation F im weiteren Ablauf immer gleich, obwohl sich die Stückgüter 2, 2*jeweils kontinuierlich weiter bewegen.

In dem Zeitfenster zwischen dem Erfassen von Stückgütern 2* durch den Manipulator 5a, 5b und deren Freigabe in der jeweiligen Zielposition ist die Geschwindigkeit des Manipulators 5a, 5b gegenüber der Transportgeschwindigkeit v3 der Formationen Fa, Fb, Fc, Fd erhöht. Die Bewegungsrichtung des Manipulators 5 beim Befördern der Stückgüter 2* der Formation F in die Zielposition ergibt sich aus einer ersten Bewegungskomponente parallel zur Transportrichtung TR der Formation und einer zweiten Bewegungskomponente senkrecht zur Transportrichtung TR der Formation F. Dadurch werden die vom Manipulator 5 erfassten Stückgüter 2* in die definierte Zielposition im Erfassungsbereich 4 des Manipulators 5 bewegt, die sich in Transportrichtung TR beabstandet vor der Formation F und seitlich verschoben zur Formation F befindet.

Die Kombination von Horizontalfördereinrichtung 6 und den beiden über der Horizontalfördereinrichtung 6 angeordneten Manipulatoren 5a, 5b bilden ein sogenanntes Gruppiermodul 20. Stückgüter, beispielsweise Gebinde aus Getränkebehältern, werden auf mindestens einer Transporteinrichtung 3 bevorzugt mit konstanter Geschwindigkeit v3 dem Gruppiermodul 20 zugeführt. Die Stückgüter 2 werden insbesondere lückenlos von den vier Transporteinrichtungen 3a, 3b, 3c, 3d in das Gruppiermodul 20 überführt und durch die Horizontalfördereinrichtung 6 konstant weiter bewegt. Die Manipulatoren 5a, 5b, die oberhalb der Horizontalfördereinrichtung 6 im Gruppiermodul 20 angeordnet sind, ergreifen jeweils eine vorgegebene Anzahl von Stückgütern 2, 2* und positionieren diese auf jeweiligen Zielpositionen P1 bis P9. Während der Positionierung der von den Manipulatoren 5a, 5b erfassten Stückgüter 2* werden die mindestens eine Transporteinrichtung 3 und die Horizontalfördereinrichtung 6 weiterhin konstant betrieben.

Aufgrund der parallelen Anordnung mehrerer Zuläufe für Reihen 1 an Stückgütern 2 und der Verwendung einer Mehrzahl von Manipulatoren 5, wobei ein Manipulator 5 mindestens Stückgüter 2 einer Reihe 1 abgreifen kann, vorzugsweise ist vorgesehen, dass ein Manipulator 5 Stückgüter 2 von mindesten zwei benachbarten Reihen 1 abgreifen kann, ist ein erhöhter Durchsatz und somit eine schneller Lagenbildung möglich. Durch die parallele Anordnung der vorbeschriebenen Gruppier- und/oder Handhabungssysteme mit überschneidenden Arbeitsbereichen können besonders schnell und einfach ganze Verbundlagen aus Stückgütern 2, 2* gemäß definierter Anordnung gebildet werden. Die parallele Anordnung führt zu einer kompakten Bauweise mit einem verhältnismäßig geringen Platzbedarf. Aufgrund der gleichzeitig erfolgenden Bearbeitung von mindestens zwei in parallelen Reihen 1 zugeführten Stückgütern 2 können somit auch hohe Durchsätze bei der Lagenbildung erzielt werden.

Die Geschwindigkeit v3, v6 ist dabei so gewählt, dass die Manipulatoren 5a, 5b innerhalb der ihnen zur Verfügung stehenden Arbeitsbereiche ausreichend Zeit haben, um die Stückgüter 2* entsprechend zu verschieben. Bevorzugt bestehen die Manipulatoren 5a, 5b aus Deltakinematik Robotern, um hoch dynamische Verschiebebewegungen zu realisieren und möglichst schnelle Taktzeiten zu ermöglichen.

Bei dem hier beschriebenen Verfahren werden die Gruppen an Stückgütern 2* gemäß der zu bildenden Anordnung während des Gruppier- / Positionierprozesses gebildet. Insbesondere ist die Gruppenbildung und Positionierung einer Gruppe von Stückgütern 2* jeweils im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Bei der lückenlosen Zuführung der Stückgüter 2 können prozessbedingt kleine Lücken zwischen den Stückgütern 2 auf den Transportbahnen 3 entstehen. Insbesondere, wenn sich solche Lücken aufsummieren, besteht die Gefahr, dass sich die einlaufenden Stückgüter 2 in Relation zu der berechneten Aufnahmeposition des Manipulators 5 verschieben, so dass der Manipulator 5 das jeweilig zu erfassende Stückgut 2, 2* bzw. die jeweilig zu erfassende Gruppe von Stückgütern 2, 2* nicht mehr in der gewünschten exakten Weise greifen kann und es unter ungünstigen Umständen zu einer Fehlfunktion der Handhabungsvorrichtung 10 kommen kann.

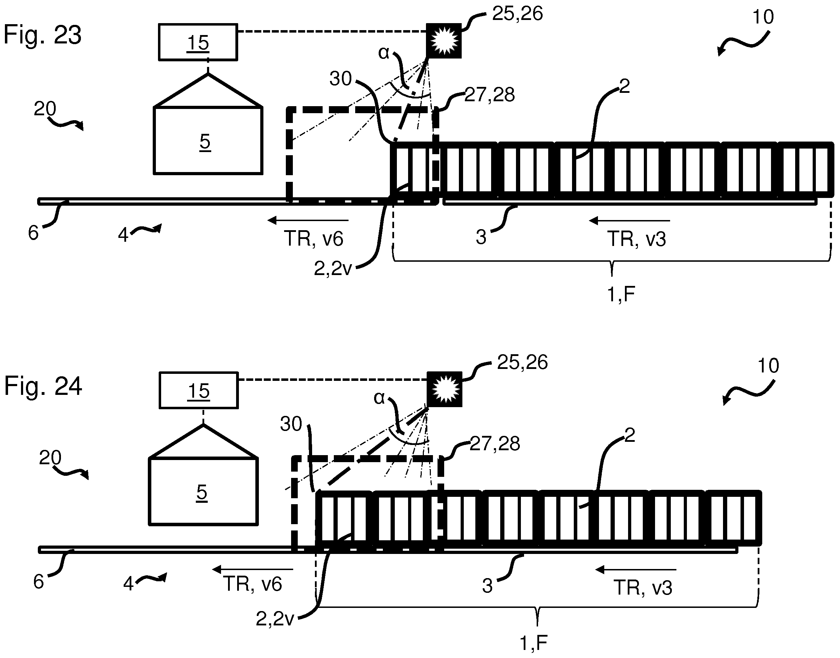

Die erfindungsgemäße Handhabungsvorrichtung 10 umfasst ein Detektionsmittel 25, das geeignet ist, auf optischem Wege die Positionen der über die Transporteinrichtungen 3 einlaufenden Stückgüter 2 zu ermitteln. Vorzugsweise ist ein Detektionsbereich 27, in dem das Detektionsmittel 25 die jeweiligen Positionen der einlaufenden Stückgüter 2 ermittelt, dem Gruppiermodul 20 zugeordnet. Gemäß einer bevorzugten Ausführungsform der Erfindung kann das Detektionsmittel 25 durch einen sog. Kantenscanner 26 gebildet sein, der jeweils eine Umrisskante einer einlaufenden Reihe 1 an Stückgütern 2 erkennt, insbesondere die Vorderkante 30 des zuvorderst einlaufenden Stückgutes 2 jeder einlaufenden Reihe 1. Der Detektionsbereich 27 ist bei diesem Ausführungsbeispiel als Scannerbereich 28 ausgebildet und liegt insbesondere im Einlaufbereich des Gruppiermoduls 20, d.h. insbesondere in einem Bereich der Horizontalfördereinrichtung 6, der in Transportrichtung TR an die Transporteinrichtungen 3 angrenzt (vgl. hierzu auch die schematischen Seitenansichten der Figuren 23 bis 30).

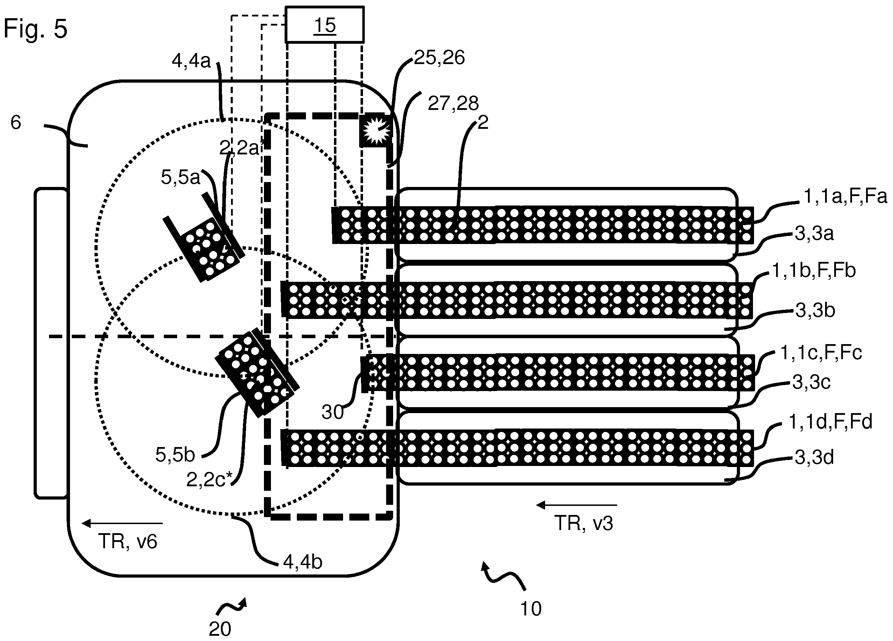

Weiterhin kann vorzugsweise vorgesehen sein, dass der Detektionsbereich 27 bzw. Scannerbereich 28 überlappend zum Erfassungsbereich 4 des mindestens einen Manipulators 5 ausgebildet ist. Nach dem Ergreifen eines Stückgutes 2, 2* bzw. einer Gruppe von Stückgütern 2, 2* durch einen Manipulator 5 wird die Vorderkante 30 des nunmehr zuvorderst einlaufenden Stückgutes 2 der jeweiligen Reihe 1 durch das Detektionsmittel 25 erkannt und diese Information wird an die Steuerungseinrichtung 15 übermittelt. Dies ist beispielhaft in den Figuren 4 und 5 dargestellt, wobei nur die Vorderkante 30 des nunmehr zuvorderst einlaufenden Stückgutes 2, 2c der Reihe 1c markiert ist.

Die Steuerungseinrichtung 15 berücksichtigt diese Information bei der Berechnung der weiteren Verfahrensschritte, insbesondere beim erneuten Abgreifen weiterer Stückgüter 2, 2* durch den jeweiligen Manipulator 5, 5a, 5b, wie es beispielsweise in den Figuren 8, 12, 16 und 19 dargestellt ist. Dadurch kann die korrekte Positionierung der Manipulatoren 5a, 5b beim Abgreifen von Stückgütern 2 in nachfolgenden Verfahrensschritten sichergestellt werden.

Vorzugsweise erfolgt die Erkennung der Position der einlaufenden Stückgüter 2 somit aufgrund der Ermittlung der Position der Vorderkante 30 des jeweilig zuvorderst angeordneten Stückgutes 2 einer jeweiligen in das Gruppiermodul 20 einlaufenden Reihe 1. Weiterhin kann vorgesehen sein, dass ein einziges Detektionsmittel 25 bzw. ein einziger Kantenscanner 26 ausreicht, um die Position der Vorderkanten 30 aller zuvorderst angeordneten Stückgüter 2, 2a, 2b, 2c, 2d aller in das Gruppiermodul 20 einlaufenden Reihen 1, 1a, 1b, 1c, 1d, gleichzeitig oder weitgehend zeitgleich zu ermitteln und die entsprechenden Informationen an die Steuerungseinrichtung 15 weiterzugeben.

Beispielsweise kann ein über Laser arbeitender Kantenscanner 26 oberhalb der Transportebene der Horizontalfördereinrichtung 6 des Gruppiermoduls 20 angeordnet sein. Zur fehlerfreien Erkennung der Positionen aller zuvorderst angeordnetenen Stückgüter 2, 2a, 2b, 2c, 2d aller in das Gruppiermodul 20 einlaufenden Reihen 1, 1a, 1b, 1c, 1d kann vorgesehen sein, dass der Kantenscanner 26 auf einer Bewegungsbahn orthogonal zur Transportrichtung TR der Horizontalfördereinrichtung 6 beweglich ist. So kann der Kantenscanner 26 beispielsweise an einem (nicht dargestellten), oberhalb der Transportebene und quer zur Transportrichtung TR befindlichen Rahmenelement auf einem Linearschlitten o.ä. verschieblich angeordnet sein. Der Kantenscanner 26 bewegt sich hierbei kontinuierlich oder bedarfsweise (je nach aktuellem Transportfortschritt der jeweiligen Reihe 1, 1a, 1b, 1c, 1d) zwischen den beiden Enden des Rahmenelementes und ermittelt dabei fortlaufend die sich kontinuierlich ändernde Position der Vorderkanten 30 der jeweilig zuvorderst angeordneten Stückgüter 2, 2a, 2b, 2c, 2d aller in das Gruppiermodul 20 einlaufenden Reihen 1, 1a, 1b, 1c, 1d. Dabei ermittelt der Kantenscanner 26 beispielsweise immer die Vorderkante 30 des Stückgutes 2, dass sich zu dem jeweiligen Ist- Zeitpunkt direkt unterhalb des Kantenscanners 26 befindet. Somit werden die Vorderkanten 30 der jeweils verschiedenen zuvorderst angeordneten Stückgüter 2, 2a, 2b, 2c, 2d der in das Gruppiermodul 20 einlaufenden Reihen 1, 1a, 1b, 1c, 1d nicht gleichzeitig, sondern mit geringer Zeitverschiebung nacheinander ermittelt. Da der Kantenscanner jedoch permanent zwischen den beiden Enden des Rahmenelementes oszillierend hin- und herbewegt wird, erfolgt die Messung der Vorderkanten 30 von Stückgütern jeweils benachbarter Reihen 1 in der Regel jeweils nur mit einer geringen Zeitverzögerung.

Anhand der ermittelten Informationen können die Manipulatoren 5a, 5b jeweils bezüglich der Vorderkante 30 des zuvorderst einlaufenden Stückgutes 2 der jeweilig abzugreifenden Reihe 1 kalibriert werden. Diese Kalibrierung kann ständig bzw. nach jedem Abgreifen von Stückgütern 2, 2a, 2b, 2c, 2d der jeweils in das Gruppiermodul 20 einlaufenden Reihen 1, 1a, 1b, 1c, 1d erfolgen. Somit ist eine Echtzeitkorrektur der Position der Manipulatoren 5a, 5b nach jedem Abgreifen von Stückgütern 2 bzw. vor jedem erneuten Abgreifen weiterer Stückgüter 2 der einlaufenden Reihen 1 anhand der genauen Position des zuvorderst einlaufenden Stückgutes 2 der jeweilig abzugreifenden Reihe 1 möglich, die effektiv eine fehlerhafte Verschiebung zwischen Manipulator 5a, 5b und zu greifendem Stückgut 2, 2* verhindert bzw. ausgleicht.

Weiterhin kann vorgesehen sein, dass der Kantenscanner 26 alternativ oder zusätzlich parallelbeweglich zur Transportrichtung TR der Horizontalfördereinrichtung 6 ausgebildet ist. Dies kann vorteilhaft sein, um den Scannerbereich 28 oberhalb der Horizontalfördereinrichtung 6 in Transportrichtung TR zu vergrößern. Insbesondere kann dies notwendig sein, wenn sich durch das Abgreifen von jeweils unterschiedlichen Mengen an Stückgütern 2 aus den verschiedenen Reihen 1 jeweils deutliche Unterschiede darin ergeben, wie weit die einzelnen Reihen 1 bereits in das Gruppiermoduls 20 hineinragen, bevor das jeweils zuvorderst angeordnete Stückgut 2 und gegebenenfalls weitere nachfolgende Stückgüter 2 der jeweiligen Reihe 1 durch einen der Manipulatoren 5a, 5b abgegriffen werden. Figuren 7 und 8 verdeutlichen beispielsweise die sich in Transportrichtung TR deutlich unterscheidende Erstreckung der jeweils zuvorderst angeordneten Stückgüter 2 der Reihen 1a, 1b, 1c, 1d auf der Horizontalfördereinrichtung 6. Für die Bewegung des Kantenscanners 26 parallel zur Transportrichtung TR der Horizontalfördereinrichtung 6 kann dieser beispielsweise auf einer entsprechenden Schlittenführung o.ä. angeordnet sein.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche ― auch als Parallelkinematik-Anordnung bekannte ― Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

In den Figuren 1 bis 21 wurde anhand von schematischen Darstellungen der zeitliche Ablauf einer ersten Ausführungsvariante eines erfindungsgemäßen Verfahrens zum Umgang mit in einer Mehrzahl von parallelen Reihen 1a, 1b, 1c, 1d, hintereinander bewegten Stückgütern 2 durch zwei parallele beweg-, verschieb- und/oder rotierbare Manipulatoren 5 einer entsprechenden Handhabungsvorrichtung 10 veranschaulicht. Wie erwähnt, kann es sich bei den schematisch angedeuteten Stückgütern 2 bzw. 2a jeweils um Gebinde aus sechs Getränkebehältern handeln, die beispielsweise mit einer Schrumpfverpackung zusammen gehalten werden.

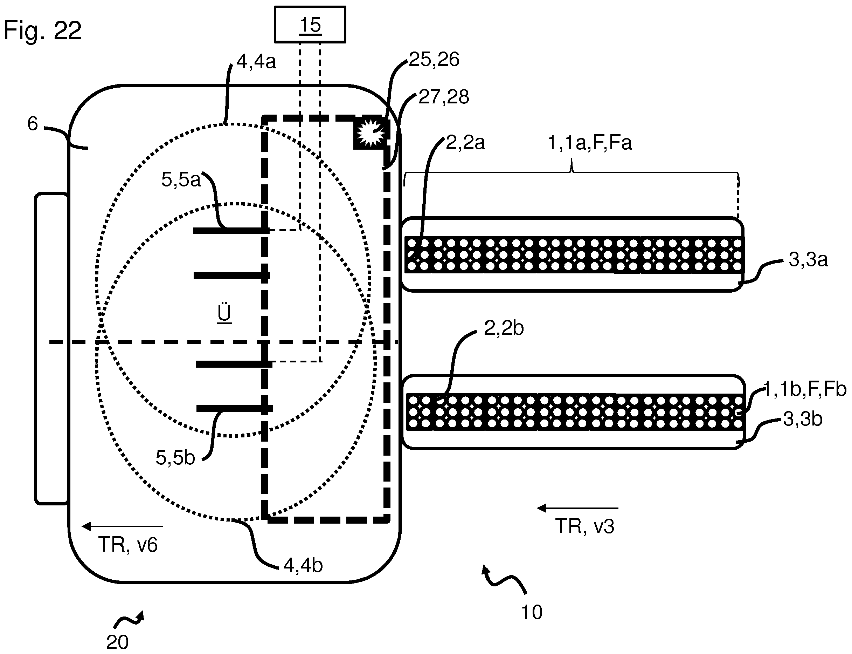

Dagegen zeigt die Fig. 22 schematisch und in Draufsicht eine alternative Anordnung zur Durchführung einer zweiten Ausführungsvariante des erfindungsgemäßen Verfahrens mittels einer entsprechend ausgestatteten Handhabungsvorrichtung 10. Auch bei dieser Variante der Vorrichtung 10 bzw. des erfindungsgemäßen Verfahrens ist vorgesehen, dass zwei parallel nebeneinander angeordnete beweg-, verschieb- und/oder rotierbare Manipulatoren 5 und insgesamt zwei parallel verlaufende Transporteinrichtungen 3 bzw. 3a und 3b mit parallelen Transportrichtungen TR vorhanden sind, über welche jeweils unmittelbar aufeinanderfolgende Stückgüter 2, 2a, 2b einer jeweiligen Reihe 1, 1a, 1b ohne Beabstandung als geschlossene Formationen F in die beiden Erfassungsbereiche 4, 4a bzw. 4b der beiden Manipulatoren 5, 5a und 5b transportierbar sind, so dass die beiden Erfassungsbereiche 4a und 4b der beiden Manipulatoren 5a und 5b jeweils eine Reihe 1a bzw. 1b mit einer geschlossenen Formation Fa bzw. Fb an transportierten Stückgütern 2a bzw. 2b erreicht.

Die im Ausführungsbeispiel der Fig. 22 dargestellte Handhabungsvorrichtung 10 umfasst für den Paralleltransport zwei parallel angeordnete Transporteinrichtungen 3, 3a und 3b, über welche unmittelbar aufeinanderfolgende Stückgüter 2, 2a bzw. 2b in zwei parallelen Reihen 1, 1a bzw. 1b unterbrechungsfrei und/oder mit kontinuierlicher Transportgeschwindigkeit v3 in die jeweiligen Erfassungsbereich 4, 4a bzw. 4b der beiden Manipulatoren 5, 5a bzw. 5b der Handhabungsvorrichtung 10 transportiert werden. Beispielsweise sind die Erfassungsbereiche 4a, 4b der zwei Manipulatoren 5a, 5b zumindest bereichsweise senkrecht zu den Transportrichtungen TR der beiden benachbarten Transporteinrichtungen 3a und 3b.

Auch bei dieser Ausführungsvariante ist wiederum vorgesehen, dass sich die beiden Erfassungsbereiche 4a und 4b in einem Überlagerungsbereich Ü teilweise überlagern. Bei dem dargestellten Ausführungsbeispiel ist vorgesehen, dass der ersten Transporteinrichtung 3a der erste Erfassungsbereich 4a des ersten Manipulators 5a der Handhabungsvorrichtung 10 zugeordnet ist, und dass der hierzu parallelen zweiten Transporteinrichtung 3b der zweite Erfassungsbereich 4b des zweiten Manipulators 5b der Handhabungsvorrichtung 10 zugeordnet ist. Wichtig ist hierbei, dass das Bewegungsmuster der Manipulatoren 5a, 5b derart aufeinander abgestimmt ist, dass es bei Erfassen und Positionieren der Stückgüter 2, 2a, 2b nicht zu einer Kollision der Manipulatoren 5a, 5b kommt. Diese Kollisionsvermeidung wird insbesondere durch die beispielhaft dargestellte Steuerungseinrichtung 15 erreicht, die mit beiden Manipulatoren 5a, 5b in Verbindung steht. Die Steuerungseinrichtung 15 enthält Informationen zu einer aus einer Vielzahl an Stückgütern 2 zu bildenden Gruppierung für eine palettierfähige Lage 12 (vergleiche hierzu etwa Fig. 21). Die jeweiligen Zielpositionen und/oder Zielausrichtungen und die durch die von den Manipulatoren 5a, 5b jeweils erfassten Gruppen an Stückgütern 2, 2a, 2b bilden einen Teil der Informationen und ordnen dem jeweiligen mindestens einen Stückgut 2, 2a, 2b eine bestimmte Lage und/oder relative Orientierung in der jeweiligen Gruppierung zu. Die Manipulatoren 5a, 5b werden entsprechend angesteuert, um jeweils eine definierte Anzahl an Stückgütern 2, 2a bzw. 2b zu erfassen und umzupositionieren.

Die Erfassungsbereiche 4a und 4b der beiden Manipulatoren 5a und 5b können sich zumindest temporär zeitlich überlagern, was durch den Überdeckungsbereich Ü angedeutet ist. Wie es die oval angedeuteten Erfassungsbereiche 4a und 4b gemäß Fig. 22 andeuten, kann jeder der beiden Manipulatoren 5a und 5b wahlweise Stückgüter 2, 2a, 2b aus der ihm zugeordneten Reihe 1, 1a bzw. 1b entnehmen, kann jedoch wahlweise auch Stückgüter 2, 2b bzw. 2a aus der jeweils anderen Reihe 1, 1b bzw. 1a entnehmen, wenn dies aus Gründen der Zeitersparnis und/oder aus Gründen einer Kollisionsvermeidung sinnvoll ist. Die beiden Manipulatoren 5a und 5b teilen sich somit zumindest temporär und/oder bedarfsweise den als gemeinsamen Bereich zu betrachtenden Überlagerungsbereich Ü und können dort wahlweise Stückgüter 2, 2a, 2b von einer der beiden Reihen 1, 1a, 1b entnehmen, was von der Steuerungseinrichtung 15 nach geeigneten Steuerungskriterien vorgegeben wird.

Die übrigen Bewegungsabläufe der in Fig. 22 gezeigten Ausführungsvariante können dem bereits anhand der Figuren 1 bis 21 gezeigten Lagenbildungsverfahren ähneln oder mit diesem übereinstimmen, so dass auf eine nochmalige Darstellung der Herstellung einer palettierbaren Lage 12 (vgl. hierzu Fig. 21) an dieser Stelle verzichtet werden kann.

Grundsätzlich kann die in Fig. 22 gezeigte Anordnung auch mit nur einer Reihe 1 und einer einzigen Transporteinrichtung 3 funktionieren, wobei auch hier zwei Manipulatoren 5a und 5b eingesetzt werden können, deren Erfassungsbereiche s4a und 4b sich vorzugsweise noch stärker überschneiden können als dies in Fig. 22 beispielhaft angedeutet ist. Eine solche Vorrichtung 10 kann bei entsprechend hohen Zufördergeschwindigkeiten v3 der Transporteinrichtung 3 eine entsprechend schnellere Lagenbildung gewährleisten als dies bei Einsatz nur eines einzigen Manipulators 5 möglich wäre.

Vorzugsweise ist bei allen Vorrichtung- und Verfahrensvarianten (Figuren 1 bis 22) zumindest einer der mehreren Manipulatoren 5, 5a, 5b als Deltakinematik-Roboter ausgebildet oder jeweils Teil eines solchen. Typischerweise sind jedoch beide Manipulatoren 5a und 5b jeweils durch gleichartige Deltakinematik-Roboter gebildet. Weiterhin ist es bevorzugt, dass zumindest ein für die Erfassung des jeweils wenigstens einen Stückgutes 2, 2a, 2b, 2c, 2d geeigneter bzw. vorgesehener Abschnitt des jeweiligen Manipulators 5, 5a, 5b bzw. des jeweiligen Deltakinematik-Roboters um eine in etwa vertikale Achse rotierbar ist, insbesondere um einen Drehwinkel von mindestens 180°, was eine noch schnellere Positionierung der Stückgüter 2, 2a, 2b, 2c, 2d bzw. von Gruppen mehrerer Stückgüter 2, 2a, 2b, 2c, 2d ermöglichen kann. Wahlweise kann auch eine Rotierbarkeit um 360° oder mehr sinnvoll sein, was insbesondere ein sog. "Weiterdrehen" des Manipulators 5, 5a, 5b nach dem Absetzen der jeweiligen Stückgüter 2, 2a, 2b, 2c, 2d an ihren Zielpositionen P ermöglichen kann. Hierdurch wird ein Rückdrehen verzichtbar, was nochmals Zeit beim Positionieren einsparen kann.

Die schematischen seitlichen Darstellungen der Figuren 23 bis 30 verdeutlichen nochmals den zeitlichen Ablauf des erfindungsgemäßen Verfahrens zum Umgang mit in einer Reihe hintereinander bewegten Stückgütern durch eine entsprechende Handhabungsvorrichtung 10. Dargestellt ist hier nur eine Reihe 1, die wahlweise eine von mehreren parallelen Reihen (vgl. Figuren 1 bis 22) repräsentieren oder auch als einzige Reihe 1 vorgesehen sein kann. Die Figuren 23 bis 30 verdeutlichen, dass die Stückgüter 2 der Reihe 1 jeweils unmittelbar aufeinanderfolgend, ohne Beabstandung als geschlossene Formationen F in den Erfassungsbereich 4 des einen Manipulators 5 transportiert werden. Da es sich prinzipiell um dieselben Verfahrensschritte handelt, werden auch dieselben Bezugszeichen wie für die Beschreibung der Figuren 1 bis 22 verwendet, auf denen Beschreibung hiermit ergänzend verwiesen wird.

Der in den Figuren 23 bis 30 dargestellte Manipulator 5 kann maximal zwei der hier dargestellten einlaufenden Stückgüter 2 erfassen. Diese umfassen beispielsweise 2x3 durch eine Umverpackung zusammengefasste Getränkebehälter o.ä. In der Praxis können derartige Manipulatoren 5 jedoch typischerweise drei oder mehr Stückgüter 2 gleichzeitig erfassen, was jedoch in der vorliegenden Beschreibung keine Rolle spielen soll, da sich die der Erfindung zugrunde liegenden Prinzipien auch anhand des gleichzeitigen Abgreifens von nur zwei Stückgütern 2 veranschaulichen lassen.

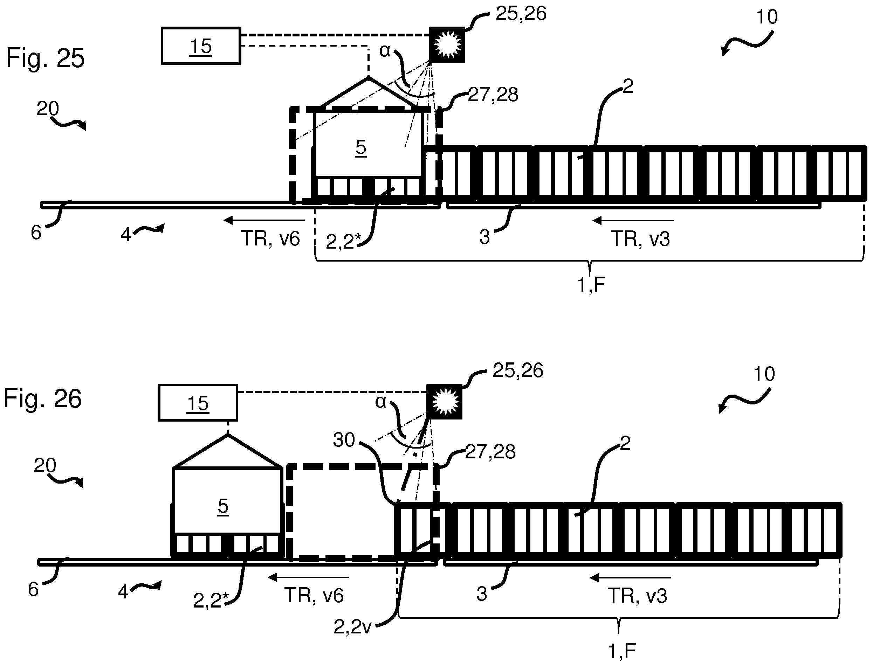

Die seitliche Darstellung verdeutlicht noch einmal die Anordnung der Sensoreinrichtung bzw. des Detektionsmittels 25 oberhalb der Transportebene für die Stückgüter 2. Das Detektionsmittel 25 erfasst zumindest eine Raumkoordinate und/oder Position des in Transportrichtung TR zuvorderst befindlichen Stückgutes 2v der Formation F bzw. Reihe 1 innerhalb eines Detektionsbereichs 27 (vgl. Fig. 26). Insbesondere erfasst das Detektionsmittel 25 eine nach vorn weisende Umrisskante des zuvorderst angeordneten Stückgutes 2v der geschlossenen Formation F, und zwar vorzugsweise die obere Vorderkante 30 des zuvorderst angeordneten Stückgutes 2v der geschlossenen Formation F (vgl. Figuren 23, 24, 26 bis 29).

Die ermittelte Raumkoordinate und/oder auf optischem Wege erfasste Position des jeweiligen Stückguts 2 bzw. 2v wird der Steuerungseinrichtung 15 zur Verfügung gestellt, die darauf basierend die Bewegungssteuerung des wenigstens einen Manipulators 5 im Erfassungsbereich 4 der Handhabungsvorrichtung 10 berechnet und den Manipulator 5 entsprechend zur Erfassung des wenigstens einen Stückgutes 2 und zur räumlichen Abtrennung desselben von der geschlossenen Formation F ansteuert, und zwar für den folgenden oder auch für den übernächsten Erfassungsvorgang.

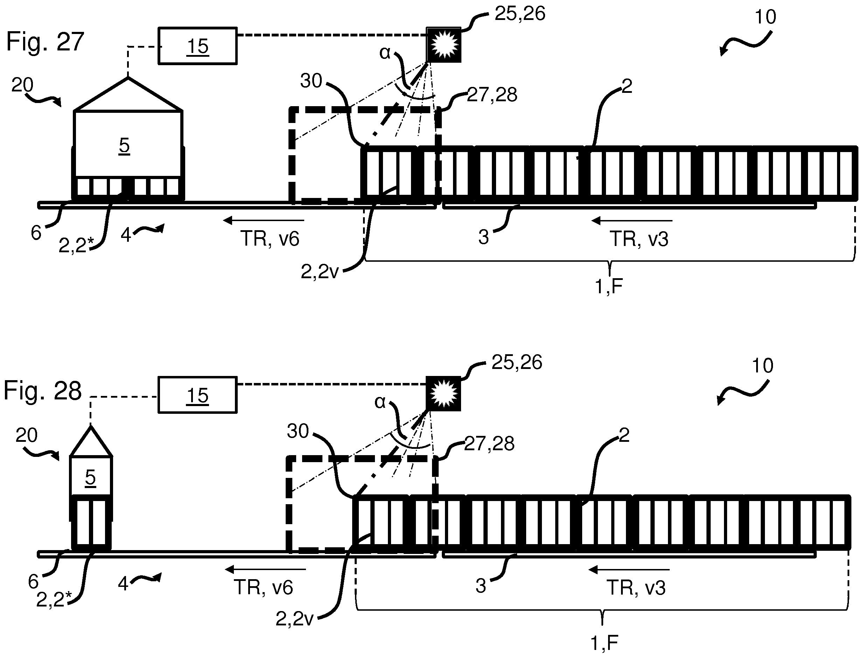

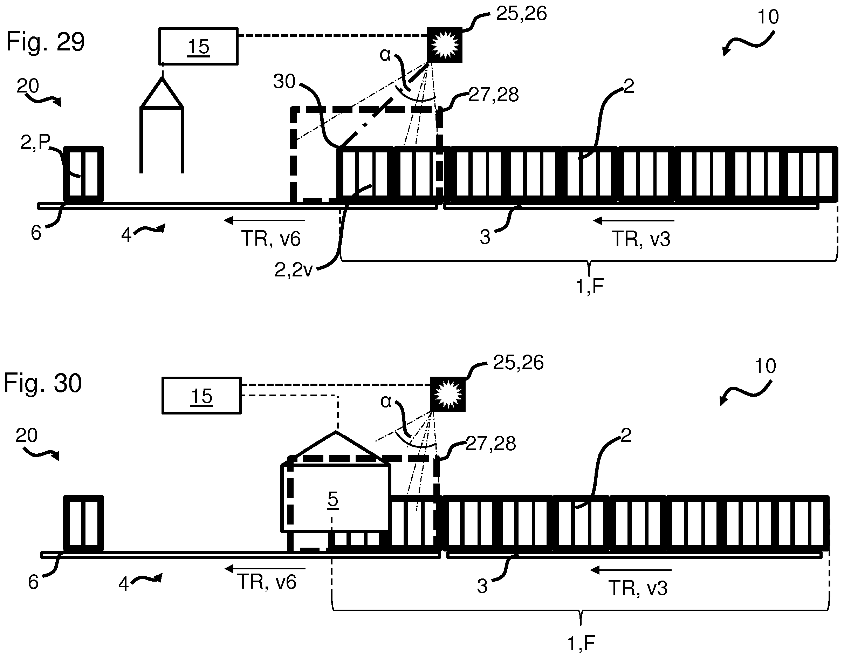

Wie in Fig. 25 dargestellt, erfasst der Manipulator 5 die beiden zuvorderst einlaufenden Stückgüter 2, 2* der Formation F und trennt diese durch Beschleunigung in Transportrichtung TR von den nachlaufenden Stückgütern 2 der Formation F ab (Figuren 26, 27). Zusätzlich dreht der Manipulator 5 die erfassten Stückgüter 2, 2* um 90° (Fig. 28), bevor er die Stückgüter 2 in einer Zielposition P freigibt (Fig. 29). Analog zu den Figuren 16 bis 18 kann die Bewegung der erfassten Stückgüter 2, 2* zwischen der Formation F und der Zielposition P auch durch eine überlagerte Rotations- und Verschiebebewegung des Manipulators 5 realisiert werden.

Anschließend erfasst der Manipulator 5 in Abhängigkeit von der zu erstellenden Ziellage mindestens das nunmehr zuerst angeordnete Stückgut 2v der Formation F, um dieses entsprechend zu positionieren (Fig. 30).

Die Figuren 23 bis 30 verdeutlichen weiterhin, dass die Sensoreinrichtung bzw. das Detektionsmittel 25 einen keilförmigen räumlichen Bereich bzw. Detektionsbereich 27 erfasst und abdeckt. Dieser erstreckt sich insbesondere oberhalb der geschlossenen Formation F und mit sich öffnendem Keilwinkel α in Richtung zur Transportrichtung TR und/oder in Richtung zum Erfassungsbereich 4. Derartige Kantenscanner 26 sind somit in der Lage, sehr präzise Ortskoordinaten der solchermaßen erfassten Objekte zu liefern, die für eine ständige Neukalibrierung des Manipulators 5 verwendet werden können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1,1a,1b: Reihe
- 1c, 1d: Reihe
- 2,2*,2a,2a*,2b,2b*: Stückgut
- 2c,2c*,2d,2d*: Stückgut
- 2v: zuvorderst angeordnetes Stückgut
- 3,3a,3b, 3c, 3d: Transporteinrichtung
- 4, 4a, 4b: Erfassungsbereich
- 5, 5a, 5b: Manipulator
- 6: Horizontalfördereinrichtung
- 10: Handhabungsvorrichtung
- 12: Lage
- 15: Steuerungseinrichtung
- 20: Gruppiermodul
- 25: Detektionsmittel
- 26: Kantenscanner
- 27: Detektionsbereich
- 28: Scannerbereich
- 30: Vorderkante

- α: Keilwinkel
- F,Fa,Fb, Fc, Fd: Formation
- P1 bis P9: Zielposition
- TR: Transportrichtung
- Ü: Überlagerungsbereich
- v3: Transportgeschwindigkeit
- v6: Geschwindigkeit

## Patentansprüche

1. Verfahren zum Umgang mit in mindestens zwei Reihen (1) über mindestens zwei Transporteinrichtungen (3) mit parallelen Transportrichtungen (TR) hintereinander bewegten Stückgütern (2), die jeweils als geschlossene Formation (F) ohne Abstände als lückenlose Aufeinanderfolge in einen Erfassungsbereich (4) eines von mindestens zwei Manipulatoren (5) transportiert werden,
- wobei sich zwei Erfassungsbereiche von mindestens zwei Manipulatoren (5) in einem Überlagerungsbereich (Ü) teilweise überlagern;
- wobei im Erfassungsbereich (4) wenigstens ein transportiertes Stückgut (2) durch einen Manipulator (5) aus der geschlossenen Formation (F) klemmend und/oder kraftschlüssig erfasst, von nachfolgenden Stückgütern (2) der geschlossenen Formation (F) räumlich abgetrennt und in eine definierte relative Zielposition (P1) und/oder Zielausrichtung gegenüber den jeweils nachfolgenden Stückgütern (2) gebracht wird,
- **dadurch gekennzeichnet, dass** zumindest Raumkoordinaten und/oder eine Position des in Transportrichtung (TR) zuvorderst befindlichen Stückgutes (2) der zum Erfassungsbereich (4) transportierten geschlossenen Formation (F) und/oder Raumkoordination und/oder eine Position wenigstens einer in Transportrichtung (TR) nach vorne weisenden Umrisskante (30) der zum Erfassungsbereich (4) transportierten geschlossene Formation (F) sensorisch erfasst und einer Steuer- und/oder Auswerteeinheit (15) als Positionswert zur Verfügung gestellt wird,
- und wobei die Bewegungssteuerung des Manipulators (5) im Erfassungsbereich (4) zur Erfassung des wenigstens einen Stückgutes (2) und zu seiner räumlichen Abtrennung von der geschlossenen Formation (F) auf Grundlage der von der Steuer- und/oder Auswerteeinheit (15) gelieferten Koordinaten- und/oder Positionswerte für das jeweils zuvorderst befindliche Stückgut (2) der geschlossenen Formation (F) und/oder dessen nach vorne weisender Umrisskante (30) erfolgt.

2. Verfahren nach Anspruch 1, bei dem die Raumkoordinaten und/oder Positionen der in Transportrichtung (TR) jeweils zuvorderst befindlichen Stückgüter (2) der zum Erfassungsbereich (4) transportierten geschlossenen Formation (F) und/oder die jeweiligen Raumkoordinaten und/oder Positionen der in Transportrichtung (TR) nach vorne weisenden Umrisskanten (30) der zum Erfassungsbereich (4) transportierten geschlossenen Formation (F) permanent und/oder in zyklischer Folge und/oder in unregelmäßiger Folge erfasst und der Steuer- und/oder Auswerteeinheit (15) als Positionswerte zur Verfügung gestellt werden.

3. Verfahren nach Anspruch 1 oder 2, bei dem die Bewegungssteuerungen des wenigstens einen Manipulators (5) bei der jeweiligen Erfassung wenigstens eines zuvorderst in der geschlossenen Formation (F) befindlichen Stückgutes (2) im Erfassungsbereich (4) auf Grundlage der von der Steuer- und/oder Auswerteeinheit (15) gelieferten Koordinaten- und/oder Positionswerte für das jeweils zuvorderst befindliche Stückgut (2) der geschlossenen Formation (F) und/oder dessen nach vorne weisender Umrisskante (30) kalibriert werden.

4. Verfahren nach Anspruch 3, bei dem die Bewegungssteuerung des wenigstens einen Manipulators (5) bei jeder Phase der Erfassung und Aufnahme des wenigstens einen Stückgutes (2) von der zum Erfassungsbereich (4) transportierten geschlossenen Formation (F) auf Grundlage der von der Steuer- und/oder Auswerteeinheit (15) gelieferten Koordinaten- und/oder Positionswerte für das jeweils zuvorderst befindliche Stückgut (2) der geschlossenen Formation (F) und/oder dessen nach vorne weisender Umrisskante (30) kalibriert wird.

5. Verfahren nach Anspruch 3, bei dem die Bewegungssteuerung des wenigstens einen Manipulators (5) bei definierten, durch Phasen ohne Neukalibrierung voneinander getrennten Phasen der Erfassung und Aufnahme des wenigstens einen Stückgutes (2) von der zum Erfassungsbereich (4) transportierten geschlossenen Formation (F) auf Grundlage der von der Steuer- und/oder Auswerteeinheit (15) gelieferten Koordinaten- und/oder Positionswerte für das jeweils zuvorderst befindliche Stückgut (2) der geschlossenen Formation (F) und/oder dessen nach vorne weisender Umrisskante (30) kalibriert wird.

6. Verfahren nach einem der Ansprüche 1 bis 5, bei dem zumindest ein Abschnitt des Erfassungsbereiches (4) und/oder eines Bewegungsraumes des wenigstens einen Manipulators (5) mittels wenigstens einer Sensoreinrichtung (25) zur Gewinnung von Raumkoordinaten und/oder Positions- und/oder Umrissdaten des wenigstens einen in Transportrichtung (TR) zuvorderst transportierten Stückgutes (2) der geschlossenen Formation (F) erfasst und überwacht wird.

7. Verfahren nach Anspruch 6, bei dem die wenigstens eine Sensoreinrichtung (25) durch mindestens einen optischen Sensor (26) in Form eines Kantenscanners gebildet ist, welcher der Steuer- und/oder Auswerteeinheit (15) Raumkoordinaten und/oder Positionswerte für das jeweils zuvorderst befindliche Stückgut (2) der geschlossenen Formation (F) und/oder dessen nach vorne weisender Umrisskante (30) liefert oder bei dem die wenigstens eine Sensoreinrichtung (25) durch mindestens eine Kamera mit nachgeschalteter Bildauswertung gebildet ist, aus deren Daten die Steuer- und/oder Auswerteeinheit (15) Raumkoordinaten und/oder Positionswerte für das jeweils zuvorderst befindliche Stückgut (2) der geschlossenen Formation (F) und/oder dessen nach vorne weisender Umrisskante (30) gewinnt.

8. Verfahren nach Anspruch 7, bei dem mittels der wenigstens einen Sensoreinrichtung (25) zumindest ein keilförmiger räumlicher Bereich erfasst wird, der sich oberhalb der geschlossenen Formation (F) und mit sich öffnendem Keilwinkel (α) in Richtung zur Transportrichtung (TR) und/oder in Richtung zum Erfassungsbereich (4) erstreckt.

9. Verfahren nach einem der Ansprüche 1 bis 8, bei dem wenigstens zwei parallele Reihen (1) mit jeweils hintereinander bewegten Stückgütern (2) als wenigstens zwei geschlossene Formationen (F) zum Erfassungsbereich (4) des wenigstens einen Manipulators (5) transportiert werden, wobei die Bewegungssteuerung des wenigstens einen Manipulators (5) im Erfassungsbereich (4) zur Erfassung jeweils wenigstens eines Stückgutes (2) von einer der geschlossenen Formationen (F) und zur räumlichen Abtrennung des Stückgutes (2) von der jeweiligen geschlossenen Formation (F) auf Grundlage der von der Steuer- und/oder Auswerteeinheit (15) gelieferten und aus Sensordaten der wenigstens einen Sensoreinrichtung (25) gewonnenen Koordinaten- und/oder Positionswerte für das jeweils zuvorderst befindliche Stückgut (2) der geschlossenen Formation (F) und/oder dessen nach vorne weisender Umrisskante (30) erfolgt.

10. Vorrichtung (10) zum Umgang mit in mindestens zwei Reihen (1) hintereinander bewegten Stückgütern (2), umfassend
- mindestens zwei Manipulatoren (5) für Stückgüter (2), wobei jeder Manipulator einen Erfassungsbereich für Stückgüter (2) umfasst;
- wobei sich zwei Erfassungsbereiche von mindestens zwei Manipulatoren (5) in einem Überlagerungsbereich (Ü) teilweise überlagern;
- wenigstens zwei Transporteinrichtungen (3) mit parallelen Transportrichtungen (TR), über welche unmittelbar aufeinanderfolgende Stückgüter (2) der Reihen (1) ohne Beabstandung als geschlossene Formation (F) in einen Erfassungsbereich (4) transportierbar sind, sowie
- wenigstens eine dem Erfassungsbereich (4) und/oder einem Bewegungsraum des Manipulators (5) zugeordnete Sensoreinrichtung (25), die zur Gewinnung von Raumkoordinaten und/oder Positions- und/oder Umrissdaten wenigstens eines in Transportrichtung (TR) zuvorderst transportierten Stückgutes (2) der geschlossenen Formation (F) vorbereitet und ausgestattet ist,
- wobei die Manipulatoren (5) zum klemmenden und/oder kraftschlüssigen Entgegennehmen jeweils mindestens eines Stückgutes (2) aus der mittels der wenigstens einen Transporteinrichtung (3) in seinen Erfassungsbereich (4) transportieren geschlossenen Formation (F) sowie zum Abtrennen und selektiven Überführen des wenigstens einen Stückgutes (2) in eine definierte Zielposition (P1) und/oder Zielausrichtung ausgebildet ist,
- **dadurch gekennzeichnet, dass** die Bewegungssteuerung des Manipulators (5) zumindest während der Erfassung des wenigstens einen Stückgutes (2) und seiner räumlichen Abtrennung von der geschlossenen Formation (F) mittels der von der Steuer- und/oder Auswerteeinheit (15) gelieferten Koordinaten- und/oder Positionswerten für die jeweils zuvorderst befindlichen Stückgüter (2) der geschlossenen Formation (F) und/oder deren nach vorne weisender Umrisskanten (30) kalibrierbar ist.

11. Vorrichtung nach Anspruch 10, bei welcher der Erfassungsbereich (4) und/oder der Manipulator (5) mittels wenigstens einer Sensoreinrichtung (25) zur Überwachung der selektiven Ansteuerung, Aktivierung und/oder Bewegung der Klemm- oder Greifmittel (22) des Manipulators (5) erfassbar und überwachbar ist.

12. Vorrichtung nach Anspruch 11, bei welcher die wenigstens eine Sensoreinrichtung (25) durch einen optischen Sensor (26) in Form eines Kantenscanners gebildet ist, welcher der Steuer- und/oder Auswerteeinheit (15) Raumkoordinaten und/oder Positionswerte für das jeweils zuvorderst befindliche Stückgut (2) der geschlossenen Formation (F) und/oder dessen nach vorne weisender Umrisskante (30) liefert oder bei der die wenigstens eine Sensoreinrichtung (25) durch mindestens eine Kamera mit nachgeschalteter Bildauswertung gebildet ist, aus deren Daten die Steuer- und/oder Auswerteeinheit (15) Raumkoordinaten und/oder Positionswerte für das jeweils zuvorderst befindliche Stückgut (2) der geschlossenen Formation (F) und/oder dessen nach vorne weisender Umrisskante (30) ableiten kann.

13. Vorrichtung nach einem der Ansprüche 10 bis 12, bei der mittels der wenigstens einen Sensoreinrichtung (25) zumindest ein keilförmiger räumlicher Bereich abgedeckt ist, der sich oberhalb der geschlossenen Formation (F) und mit sich öffnendem Keilwinkel (α) in Richtung zur Transportrichtung (TR) und/oder in Richtung zum Erfassungsbereich (4) erstreckt.

14. Vorrichtung nach einem der Ansprüche 10 bis 13, bei der wenigstens zwei parallele Reihen (1) mit jeweils hintereinander bewegten Stückgütern (2) als wenigstens zwei geschlossene Formationen (F) zum Erfassungsbereich (4) des wenigstens einen Manipulators (5) transportiert werden, wobei die Bewegungssteuerung des wenigstens einen Manipulators (5) im Erfassungsbereich (4) zur Erfassung jeweils wenigstens eines Stückgutes (2) von einer der geschlossenen Formationen (F) und zur räumlichen Abtrennung des Stückgutes (2) von der jeweiligen geschlossenen Formation (F) auf Grundlage der von der Steuer- und/oder Auswerteeinheit (15) gelieferten und aus Sensordaten der wenigstens einen Sensoreinrichtung (25) gewonnenen Koordinaten- und/oder Positionswerte für das jeweils zuvorderst befindliche Stückgut (2) der geschlossenen Formation (F) und/oder dessen nach vorne weisender Umrisskante (30) erfolgt.

15. Vorrichtung nach einem der Ansprüche 10 bis 14, bei welcher der mindestens eine Manipulator (5) als Parallelkinematik-Roboter ausgebildet oder Teil eines solchen ist.

## Claims

1. A method used to handle piece goods (2) being moved one after another in at least two rows (1) via at least two transport devices (3) with parallel transport directions (TR), the piece goods (2) being in each instance transported as closed formation (F) without spaces as an unspaced succession into a seizing range (4) of one of the at least two manipulators (5),
- wherein two seizing ranges of at least two manipulators (5) partially overlap in an overlap area (U);
- wherein at least one transported piece good (2) is seized in the seizing range (4) from the closed formation (F) by a manipulator (5) in a clamping and/or force-locking manner, is spatially separated from the subsequent piece goods (2) of the closed formation (F), and is brought into a specified relative target position (P1) and/or target alignment in relation to the in each instance subsequent piece goods (2),
- **characterised in that** at least space coordinates and/or a position of the piece good (2) located foremost in transport direction (TR) of the closed formation (F) being transported to the seizing range (4) and/or space coordinates and/or a position of at least one contour edge (30) facing forward in transport direction (TR) of the closed formation (F) being transported to the seizing range (4) is sensor-detected and provided as a position value to a control unit and/or analysis unit (15),
- and wherein, for the purpose of seizing the at least one piece good (2) and for the spatial separation thereof from the closed formation (F), the movement control of the manipulator (5) in the seizing range (4) is carried out based on the coordinate values and/or position values delivered by the control unit and/or analysis unit (15) for the in each instance foremost located piece good (2) of the closed formation (F) and/or for the forward-facing contour edge (30) of said piece good (2).

2. The method according to claim 1, in which the space coordinates and/or positions of the piece goods (2) located in each instance foremost in transport direction (TR) of the closed formation (F) being transported to the seizing range (4) and/or the particular space coordinates and or positions of the contour edges (30) facing forward in transport direction (TR) of the closed formation (F) being transported to the seizing range (4) are detected permanently and/or in cyclic sequence and/or in irregular sequence and provided as position values to a control unit and/or analysis unit (15).

3. The method according to claim 1 or 2, in which the movement controls of the at least one manipulator (5) are calibrated in the seizing range (4) during the particular seizing of the at least one foremost located piece good (2) in the closed formation (F), with the calibration being based on the coordinate values and/or position values delivered by the control unit and/or analysis unit (15) for the in each instance foremost located piece good (2) of the closed formation (F) and/or for the forward-facing contour edge (30) of said piece good (2).

4. The method according to claim 3, in which the movement control of the at least one manipulator (5) is calibrated in each phase of the seizing and receiving of the at least one piece good (2) of the closed formation (F) being transported to the seizing range (4), with the calibration being based on the coordinate values and/or position values delivered by the control unit and/or analysis unit (15) for the in each instance foremost located piece good (2) of the closed formation (F) and/or for the forward-facing contour edge (30) of said piece good (2).

5. The method according to claim 3, in which the movement control of the at least one manipulator (5) is calibrated in specified phases of the seizing and receiving of the at least one piece good (2) of the closed formation (F) being transported to the seizing range (4), said phases being separated from each other by phases without recalibration, with the calibration being based on the coordinate values and/or position values delivered by the control unit and/or analysis unit (15) for the in each instance foremost located piece good (2) of the closed formation (F) and/or for the forward-facing contour edge (30) of said piece good (2).

6. The method according to one of the claims 1 to 5, in which at least one section of the seizing range (4) and/or of a movement range of the at least one manipulator (5) is detected and monitored by at least one sensor device (25) for the purpose of acquiring space coordinates and/or position data and/or contour data of the at least one piece good (2) of the closed formation (F), said piece good (2) being transported foremost in transport direction (TR).

7. The method according to claim 6, in which the at least one sensor device (25) is formed by at least one optical sensor (26) in the form of an edge scanner, which delivers space coordinates and/or position values for the in each instance foremost located piece good (2) of the closed formation (F) and/or for the forward-facing contour edge (30) of said piece good (2) to the control unit and/or analysis unit (15), or in which the at least one sensor device (25) is formed by at least one camera with downstream image evaluation, with the control unit and/or analysis unit (15) acquiring space coordinates and/or position values from the data of said sensor device (25) for the in each instance foremost located piece good (2) of the closed formation (F) and/or for the forward-facing contour edge (30) of said piece good (2).

8. The method according to claim 7, in which at least one wedge-shaped spatial area is detected by the at least one sensor device (25), said wedge-shaped spatial area extending above the closed formation (F) and with an opening wedge angle (α) toward the transport direction (TR) and/or toward the seizing range (4).

9. The method according to one of the claims 1 to 8, in which at least two parallel rows (1) of piece goods (2) being in each instance moved one after another are transported as at least two closed formations (F) to the seizing range (4) of the at least one manipulator (5), wherein, for the purpose of seizing in each instance at least one piece good (2) from one of the closed formations (F) and for the spatial separation of the piece good (2) from the particular closed formation (F), the movement control of the at least one manipulator (5) in the seizing range (4) is carried out based on the coordinate values and/or position values, delivered by the control unit and/or analysis unit (15) and acquired from sensor data of the at least one sensor device (25), for the in each instance foremost located piece good (2) of the closed formation (F) and/or for the forward-facing contour edge (30) of said piece good (2).

10. An apparatus (10) used to handle piece goods (2) being moved one after another in at least two rows (1), the apparatus (10) comprising
- at least two manipulators (5) for piece goods (2), wherein each manipulator comprises a seizing range for piece goods (2);
- wherein two seizing ranges of at least two manipulators (5) partially overlap in an overlap area (U);
- at least two transport devices (3) with parallel transport directions (TR), via which transport devices (3) immediately consecutive piece goods (2) of the rows (1) are transportable without spaces as closed formation (F) into a seizing range (4), as well as
- at least one sensor device (25) assigned to the seizing range (4) and/or to a movement range of the manipulator (5), said sensor device (25) being prepared and equipped for the purpose of acquiring space coordinates and/or position data and/or contour data of at least one piece good (2) of the closed formation (F), said piece good (2) being transported foremost in transport direction (TR),
- wherein the manipulators (5) are designed to receive in each instance at least one piece good (2) in a clamping and/or force-locking manner, as well as to separate and selectively transfer the at least one piece good (2), having been transported into the seizing range (4) of the manipulator (5) by the at least one transport device (3), from the closed formation (F) into a specified target position (P1) and/or target alignment,
- **characterised in that** the movement control of the manipulator (5) is calibratable, at least during the seizing of the at least one piece good (2) and during the spatial separation thereof from the closed formation (F), by the coordinate values and/or position values delivered by the control unit and/or analysis unit (15) for the in each instance foremost located piece goods (2) of the closed formation (F) and/or for the forward-facing contour edges (30) of said piece goods (2).

11. The apparatus according to claim 10, in which the seizing range (4) and/or the manipulator (5) is detectable and monitorable by at least one sensor device (25) for the purpose of the monitoring of the selective control, activation, and/or movement of the clamping means or gripping means (22) of the manipulator (5).

12. The apparatus according to claim 11, in which the at least one sensor device (25) is formed by an optical sensor (26) in the form of an edge scanner, which delivers space coordinates and/or position values for the in each instance foremost located piece good (2) of the closed formation (F) and/or for the forward-facing contour edge (30) of said piece good to the control unit and/or analysis unit (15), or in which the at least one sensor device (25) is formed by at least one camera with downstream image evaluation, with the control unit and/or analysis unit (15) being able to derive space coordinates and/or position values from the data of said sensor device (25) for the in each instance foremost located piece good (2) of the closed formation (F) and/or for the forward-facing contour edge (30) of said piece good (2).

13. The apparatus according to one of the claims 10 to 12, in which at least one wedge-shaped spatial area is covered by the at least one sensor device (25), said wedge-shaped spatial area extending above the closed formation (F) and with an opening wedge angle (α) toward the transport direction (TR) and/or toward the seizing range (4).

14. The apparatus according to one of the claims 10 to 13, in which at least two parallel rows (1) of piece goods (2) being in each instance moved one after another are transported as at least two closed formations (F) to the seizing range (4) of the at least one manipulator (5), wherein, for the purpose of seizing in each instance at least one piece good (2) from one of the closed formations (F) and for the spatial separation of the piece good (2) from the particular closed formation (F), the movement control of the at least one manipulator (5) in the seizing range (4) is carried out based on the coordinate values and/or position values, delivered by the control unit and/or analysis unit (15) and acquired from sensor data of the at least one sensor device (25), for the in each instance foremost located piece good (2) of the closed formation (F) and/or for the forward-facing contour edge (30) of said piece good (2).

15. The apparatus according to one of the claims 10 to 14, in which the at least one manipulator (5) is designed as a parallel kinematic robot or is a part thereof.

## Revendications

1. Procédé de manipulation de produits de détail (2) qui sont déplacés les uns derrière les autres en au moins deux rangées (1) au moyen d'au moins deux dispositifs de transport (3) ayant des directions de transport (TR) parallèles et qui sont transportés respectivement en tant que formation fermée (F), sans intervalles comme succession exempte de lacune, dans une zone de saisie (4) d'un d'au moins deux manipulateurs (5),
- dans lequel deux zones de saisie d'au moins deux manipulateurs (5) se recouvrent en partie dans une zone de recouvrement (Ü);
- dans lequel, dans la zone de saisie (4), au moins un produit de détail (2) transporté est saisi par serrage et/ou par adhérence dans la formation fermée (F) par l'intermédiaire d'un manipulateur (5), est séparé spatialement de produits de détail (2) suivants de la formation fermée (F) et est amené dans une position cible (P1) et/ou orientation cible relative(s) définie(s) par rapport aux produits de détail (2) respectivement suivants,
- **caractérisé par le fait qu'**au moins des coordonnées spatiales et/ou une position du produit de détail (2) situé en premier dans la direction de transport (TR), de la formation fermée (F) transportée vers la zone de saisie (4), et/ou des coordonnées spatiales et/ou une position d'au moins un bord de contour (30) montrant vers l'avant dans la direction de transport (TR), de la formation fermée (F) transportée vers la zone de saisie (4), est/sont détectée(s) par capteur et est/sont mise(s) à la disposition d'une unité de commande et/ou d'évaluation (15) en tant que valeur de position,
- et dans lequel la commande de déplacement du manipulateur (5) dans la zone de saisie (4) pour saisir ledit au moins un produit de détail (2) et pour séparer celui-ci spatialement de la formation fermée (F) se fait sur la base des valeurs de coordonnées et/ou de position fournies par l'unité de commande et/ou d'évaluation (15), pour le produit de détail (2) de la formation fermée (F), qui est situé respectivement en premier, et/ou de son bord de contour (30) montrant vers l'avant.

2. Procédé selon la revendication 1, dans lequel les coordonnées spatiales et/ou les positions des produits de détail (2) situés respectivement en premier dans la direction de transport (TR), de la formation fermée (F) qui est transportée vers la zone de saisie (4), et/ou les coordonnées spatiales et/ou positions respectives des bords de contour (30) montrant vers l'avant dans la direction de transport (TR), de la formation fermée (F) transportée vers la zone de saisie (4) sont détectées en permanence et/ou selon une séquence cyclique et/ou dans un ordre irrégulier et sont mises à la disposition de l'unité de commande et/ou d'évaluation (15) en tant que valeurs de position.

3. Procédé selon la revendication 1 ou 2, dans lequel la commande de déplacement dudit au moins un manipulateur (5) lors de la saisie respective, dans la zone de saisie (4), d'au moins un produit de détail (2) situé en premier dans la formation fermée (F) est calibrée sur la base des valeurs de coordonnées et/ou de position fournies par l'unité de commande et/ou d'évaluation (15), pour le produit de détail (2) de la formation fermée (F), qui est situé respectivement en premier, et/ou de son bord de contour (30) montrant vers l'avant.

4. Procédé selon la revendication 3, dans lequel la commande de déplacement dudit au moins un manipulateur (5) lors de chaque phase de la saisie et de la réception dudit au moins un produit de détail (2) de la formation fermée (F) transportée vers la zone de saisie (4) est calibrée sur la base des valeurs de coordonnées et/ou de position fournies par l'unité de commande et/ou d'évaluation (15), pour le produit de détail (2) de la formation fermée (F), qui est situé respectivement en premier, et/ou de son bord de contour (30) montrant vers l'avant.

5. Procédé selon la revendication 3, dans lequel la commande de déplacement dudit au moins un manipulateur (5) lors de phases définies de la saisie et de la réception dudit au moins un produit de détail (2) de la formation fermée (F) transportée vers la zone de saisie (4), qui sont séparées les unes des autres par des phases sans recalibrage, est calibrée sur la base des valeurs de coordonnées et/ou de position fournies par l'unité de commande et/ou d'évaluation (15), pour le produit de détail (2) de la formation fermée (F), qui est situé respectivement en premier, et/ou de son bord de contour (30) montrant vers l'avant.

6. Procédé selon l'une quelconque des revendications 1 à 5, dans lequel au moins une section de la zone de saisie (4) et/ou d'un espace de mouvement dudit au moins un manipulateur (5) est détecté(e) et surveillé(e) au moyen d'au moins un dispositif capteur (25) pour obtenir des coordonnées spatiales et/ou des données de position et/ou de contour dudit au moins un produit de détail (2) de la formation fermée (F), qui est transporté en premier dans la direction de transport (TR).

7. Procédé selon la revendication 6, dans lequel ledit au moins un dispositif capteur (25) est formé par au moins un capteur optique (26) sous la forme d'un scanner de bord qui fournit à l'unité de commande et/ou d'évaluation (15) des coordonnées spatiales et/ou des valeurs de position pour le produit de détail (2) de la formation fermée (F), qui se trouve respectivement en premier, et/ou de son bord de contour (30) montrant vers l'avant, ou dans lequel ledit au moins un dispositif capteur (25) est formé par au moins une caméra avec une évaluation d'image en aval à partir des données de laquelle l'unité de commande et/ou d'évaluation (15) acquiert des coordonnées spatiales et/ou des valeurs de position pour le produit de détail (2) de la formation fermée (F), qui se trouve respectivement en premier, et/ou de son bord de contour (30) montrant vers l'avant.

8. Procédé selon la revendication 7, dans lequel au moins une zone spatiale en forme de coin est détectée au moyen dudit au moins un dispositif capteur (25), laquelle s'étend au-dessus de la formation fermée (F) et à un angle de coin s'ouvrant (α) vers la direction de transport (TR) et/ou vers la zone de saisie (4).

9. Procédé selon l'une quelconque des revendications 1 à 8, dans lequel au moins deux rangées (1) parallèles comprenant chacune des produits de détail (2) déplacés les uns derrière les autres sont transportées en tant qu'au moins deux formations fermées (F) vers la zone de saisie (4) dudit au moins un manipulateur (5), dans lequel la commande de déplacement dudit au moins un manipulateur (5) dans la zone de saisie (4) pour saisir respectivement au moins un produit de détail (2) de l'une des formations fermées (F) et pour séparer spatialement le produit de détail (2) de la formation fermée (F) respective se fait sur la base des valeurs de coordonnées et/ou de position fournies par l'unité de commande et/ou d'évaluation (15) et obtenues à partir de données de capteur dudit au moins un dispositif capteur (25), pour le produit de détail (2) de la formation fermée (F), qui est situé respectivement en premier, et/ou de son bord de contour (30) montrant vers l'avant.

10. Dispositif (10) de manipulation de produits de détail (2) déplacés les uns derrière les autres en au moins deux rangées (1), comprenant
- au moins deux manipulateurs (5) pour des produits de détail (2), dans lequel chaque manipulateur comprend une zone de saisie pour des produits de détail (2);
- dans lequel deux zones de saisie d'au moins deux manipulateurs (5) se recouvrent en partie dans une zone de recouvrement (Ü);
- au moins deux dispositifs de transport (3) ayant des directions de transport (TR) parallèles par l'intermédiaire desquels des produits de détail (2) immédiatement successifs des rangées (1) peuvent être transportés sans espacement, en tant que formation fermée (F), dans une zone de saisie (4), ainsi qu'
- au moins un dispositif capteur (25) qui est associé à la zone de saisie (4) et/ou à un espace de déplacement du manipulateur (5) et qui est préparé et équipé pour obtenir des coordonnées spatiales et/ou des données de position et/ou de contour d'au moins un produit de détail (2) de la formation fermée (F), qui est transporté en premier dans la direction de transport (TR),
- dans lequel lesdits manipulateurs (5) sont conçus pour recevoir par serrage et/ou par adhérence respectivement au moins un produit de détail (2) de la formation fermée (F) transportée au moyen dudit au moins un dispositif de transport (3) dans sa zone de saisie (4), ainsi que pour séparer et transférer sélectivement ledit au moins un produit de détail (2) dans une position cible (P1) et/ou orientation cible définie(s),
- **caractérisé par le fait que** la commande de déplacement du manipulateur (5), au moins pendant la saisie dudit au moins un produit de détail (2) et sa séparation spatiale de la formation fermée (F) peut être calibrée au moyen des valeurs de coordonnées et/ou de position fournies par l'unité de commande et/ou d'évaluation (15), pour les produits de détail (2) de la formation fermée (F), qui sont situés respectivement en premier, et/ou de leurs bords de contour (30) montrant vers l'avant.

11. Procédé selon la revendication 10, dans lequel la zone de saisie (4) et/ou le manipulateur (5) peut être détecté(e) et surveillé(e) au moyen d'au moins un dispositif capteur (25) destiné à surveiller la commande, l'activation et/ou le déplacement sélectifs des moyens de serrage ou de préhension (22) du manipulateur (5).

12. Dispositif selon la revendication 11, dans lequel ledit au moins un dispositif capteur (25) est formé par un capteur optique (26) sous la forme d'un scanner de bord qui fournit à l'unité de commande et/ou d'évaluation (15) des coordonnées spatiales et/ou des valeurs de position pour le produit de détail (2) de la formation fermée (F), qui se trouve respectivement en premier, et/ou de son bord de contour (30) montrant vers l'avant, ou dans lequel ledit au moins un dispositif capteur (25) est formé par au moins une caméra avec une évaluation d'image en aval à partir des données de laquelle l'unité de commande et/ou d'évaluation (15) peut dériver des coordonnées spatiales et/ou des valeurs de position pour le produit de détail (2) de la formation fermée (F), qui se trouve respectivement en premier, et/ou de son bord de contour (30) montrant vers l'avant.

13. Dispositif selon l'une quelconque des revendications 10 à 12, dans lequel au moins une zone spatiale en forme de coin est couverte au moyen dudit au moins un dispositif capteur (25), laquelle s'étend au-dessus de la formation fermée (F) et à un angle de coin s'ouvrant (α) vers la direction de transport (TR) et/ou vers la zone de saisie (4).

14. Dispositif selon l'une quelconque des revendications 10 à 13, dans lequel au moins deux rangées (1) parallèles comprenant chacune des produits de détail (2) déplacés les uns derrière les autres sont transportées en tant qu'au moins deux formations fermées (F) vers la zone de saisie (4) dudit au moins un manipulateur (5), dans lequel la commande de déplacement dudit au moins un manipulateur (5) dans la zone de saisie (4) pour saisir respectivement au moins un produit de détail (2) de l'une des formations fermées (F) et pour séparer spatialement le produit de détail (2) de la formation fermée (F) respective se fait sur la base des valeurs de coordonnées et/ou de position fournies par l'unité de commande et/ou d'évaluation (15) et obtenues à partir de données de capteur dudit au moins un dispositif capteur (25), pour le produit de détail (2) de la formation fermée (F), qui est situé respectivement en premier, et/ou de son bord de contour (30) montrant vers l'avant.

15. Dispositif selon l'une quelconque des revendications 10 à 14, dans lequel ledit au moins un manipulateur (5) est conçu en tant que robot à cinématique parallèle (42) ou fait partie d'un tel robot à cinématique parallèle.
